(19) Europäisches Patentamt
European Patent Office
Office européen des brevets

(11) EP 4 808 234 A1

(12) EUROPEAN PATENT APPLICATION
published in accordance with Art. 153(4) EPC

(43) Date of publication:
**16.09.2026 Bulletin 2026/38**

(21) Application number: **23957925.3**

(22) Date of filing: **07.11.2023**

(51) International Patent Classification (IPC):
***H04W 72/0446** (2023.01)*

(52) Cooperative Patent Classification (CPC):
**H04W 72/0446**

(86) International application number:
**PCT/CN2023/130297**

(87) International publication number:
**WO 2025/097315 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **ZHANG, Yi**
**Dongguan, Guangdong 523860 (CN)**
- **XU, Jing**
**Dongguan, Guangdong 523860 (CN)**
- **LIN, Yanan**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

# (54) SIGNAL TRANSMISSION METHOD, APPARATUS, DEVICE, MEDIUM, AND PROGRAM PRODUCT

(57) The present application discloses a signal transmission method, an apparatus, a device, a medium, and a program product, and belongs to the technical field of communication. The method comprises: in a time domain resource conforming to a first frame structure, sending or receiving a signal, the first frame structure comprising at least one of the following: a first time unit group, a second time unit group, and a first time interval. The method, by means of sending or receiving a signal in a time domain resource conforming to a first frame structure, enables a first time interval to exist between the first time unit group and the second time unit group, which can reduce transmission interference between signals carried in different time unit groups.

Transmitting or receiving a signal in a time domain resource that conforms to a first frame structure — 710

FIG. 7

EP 4 808 234 A1

## Description

### TECHNICAL FIELD

The present disclosure relates to the technical field of communications, and in particular, to a method for signal transmission, and an apparatus, device, medium, and program product therefor.

### RELATED ART

With the continuous development of communication technology, the next-generation network will be an integration of mobile communication networks, sensing networks, and computing power networks. In a narrow sense, a sensing network refers to a system capable of performing target localization, target imaging, target detection, target tracking, and target identification. In a broader sense, a sensing network refers to a system capable of perceiving all attributes and states of services, networks, users, terminals, and environmental objects.

However, in a process of transmitting a sensing signal and a communication signal in the next-generation network, the sensing signal and the communication signal may interfere with each other.

### SUMMARY

The present disclosure provides a method for signal transmission, and an apparatus, device, medium, and program product therefor. The technical solutions are as follows:

According to one aspect of the embodiments of the present disclosure, a method for signal transmission is provided. The method is performed by a communication device and includes:

transmitting or receiving a signal in a time-domain resource that conforms to a first frame structure.

The first frame structure includes at least one of a first time unit group, a second time unit group, or a first time interval.

According to another aspect of the embodiments of the present disclosure, a method for signal transmission is provided. The method is performed by a communication device, and the method includes:

transmitting or receiving a first signal and/or a second signal.

The time interval between the first signal and the second signal includes a predefined interval.

According to another aspect of the embodiments of the present disclosure, a method for transmitting configuration information is provided. The method is performed by a communication device and includes:

transmitting or receiving time-domain configuration information, wherein the time-domain configuration information is used to configure at least one of a first time unit group, a second time unit group, or a first time interval.

The first time unit group is a time-domain resource allowed to be occupied by a first signal, and the second time unit group is a time-domain resource allowed to be occupied by a second signal.

According to another aspect of the embodiments of the present disclosure, an apparatus for signal transmission is provided. The apparatus includes:

a transceiver module, configured to transmit or receive a signal in a time-domain resource that conforms to a first frame structure.

The first frame structure includes at least one of: a first time unit group, a second time unit group, or a first time interval.

According to another aspect of the embodiments of the present disclosure, an apparatus for signal transmission is provided. The apparatus includes:

a transceiver module, configured to transmit or receive a first signal and/or a second signal;

The time interval between the first signal and the second signal includes a predefined interval.

According to another aspect of the embodiments of the present disclosure, an apparatus for transmitting configuration information is provided. The apparatus includes:

a transceiver module, configured to transmit or receive time-domain configuration information, wherein the time-domain configuration information is used to configure at least one of a first time unit group, a second time unit group, or a first time interval.

The first time unit group is the time-domain resource allowed to be occupied by a first signal, and the second time unit group is the time-domain resource allowed to be occupied by a second signal.

According to another aspect of the embodiments of the present disclosure, a communication device is provided. The device includes:

a processor; a transceiver connected to the processor; a memory configured to store one or more executable instructions of the processor.

The processor is configured to load and execute executable instructions to implement the method for signal

transmission or the method for transmitting configuration information as described in the above aspects.

According to another aspect of the embodiments of the present disclosure, a chip is provided. The chip includes a programmable logic circuit and/or one or more program instructions. The chip, when running, is caused to implement the method for signal transmission or the method for transmitting configuration information as described in the above aspects.

According to another aspect of the embodiments of the present disclosure, a computer-readable storage medium is provided, in which at least one program is stored. The at least one program is loaded and executed by a processor to implement the method for signal transmission or the method for transmitting configuration information as described in the above aspects.

According to another aspect of the embodiments of the present disclosure, a computer program product or computer program is provided, which includes computer instructions stored in a computer-readable storage medium. The computer instructions, when read from the computer-readable storage medium and executed by a processor, cause the processor to implement the method for signal transmission or the method for transmitting configuration information as described in the above aspects.

The technical solutions according to the embodiments of the present disclosure may include the following beneficial effects:

By transmitting or receiving a signal in a time-domain resource that conforms to a first frame structure, wherein the first frame structure includes at least one of a first time unit group, a second time unit group, or a first time interval, transmission interference between signals carried in different time unit groups can be reduced in a case where the first time interval exists between the first time unit group and the second time unit group.

## BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.

FIG. 1 illustrates a schematic diagram of a frame structure according to the related art;
FIG. 2 illustrates a schematic diagram of a slot structure according to the related art;
FIG. 3 illustrates a schematic diagram of a cyclic prefix design according to the related art;
FIG. 4 illustrates a schematic diagram of interference existing between symbols according to the related art;
FIG. 5 illustrates a schematic diagram of the Cross Division Duplex (XDD) technology according to the related art;
FIG. 6 illustrates a schematic diagram of a communication system according to an exemplary embodiment of the present disclosure;
FIG. 7 illustrates a flowchart of a method for signal transmission according to an exemplary embodiment of the present disclosure;
FIG. 8 illustrates a schematic diagram of a first frame structure according to an exemplary embodiment of the present disclosure;
FIG. 9 illustrates a schematic diagram of the configuration manner for the time-domain positions of a time unit group set according to an exemplary embodiment of the present disclosure;
FIG. 10 illustrates a schematic diagram of symbol configuration according to an exemplary embodiment of the present disclosure;
FIG. 11 illustrates a flowchart of a method for signal transmission according to an exemplary embodiment of the present disclosure;
FIG. 12 illustrates a flowchart of a method for transmitting configuration information according to an exemplary embodiment of the present disclosure;
FIG. 13 illustrates a block diagram of an apparatus for signal transmission according to an exemplary embodiment of the present disclosure;
FIG. 14 illustrates a block diagram of an apparatus for signal transmission according to an exemplary embodiment of the present disclosure;
FIG. 15 illustrates a block diagram of an apparatus for transmitting configuration information according to an exemplary embodiment of the present disclosure; and
FIG. 16 illustrates a schematic structural diagram of a communication device according to an exemplary embodiment of the present disclosure.

## DETAILED DESCRIPTION

For clearer descriptions of the objectives, technical solutions, and advantages of the present disclosure,

embodiments of the present disclosure are further described in detail hereinafter with reference to the accompanying drawings. Exemplary embodiments are described in detail herein, with examples illustrated in the accompanying drawings. When the following description refers to the accompanying drawings, unless otherwise indicated, the same numerals in different accompanying drawings represent the same or similar elements. The implementations described in the following exemplary embodiments do not represent all implementations consistent with the present disclosure. Instead, they are merely examples of apparatus and methods consistent with some aspects of the present disclosure as detailed in the appended claims.

The terms used in the present disclosure are solely for the purpose of describing specific embodiments and are not intended to limit the disclosure. The use of the singular forms "a", "an", "the", and "this" in the present disclosure and the appended claims is also intended to include the plural form, unless the context clearly indicates otherwise. It should also be understood that the term "and/or" used herein refers to and includes any or all possible combinations of one or more associated listed items.

It should be understood that although the terms "first", "second", "third", or the like may be used in the present disclosure to describe various information, such information should not be limited to these terms. These terms are only used to distinguish between pieces of information of the same type. For example, without departing from the scope of the present disclosure, first information may also be referred to as second information, and similarly, second information may also be referred to as first information. Depending on the context, the word "if" as used herein may be interpreted as "in the case where", "when", or "in response to determining".

The technical solutions described in some embodiments of the present disclosure can be applied to various communication systems, such as the Global System for Mobile Communications (GSM) system, the Code Division Multiple Access (CDMA) system, the Wideband Code Division Multiple Access (WCDMA) system, the General Packet Radio Service (GPRS), the Long Term Evolution (LTE) system, the Advanced Long Term Evolution (LTE-A) system, the New Radio (NR) system, the evolved system of the NR system, the LTE-based access to unlicensed spectrum (LTE-U) system, the NR-based access to unlicensed spectrum (NR-U) system, the Non-Terrestrial Networks (NTN) system, the Universal Mobile Telecommunication System (UMTS), the Wireless Local Area Networks (WLAN), the Wireless Fidelity (WiFi), the 5$^{th}$ generation (5G) system, the cellular Internet of Things(IoT) system, the cellular passive IoT system, and can also be applied to the subsequent evolved system of the 5G NR system, as well as to the 6G and subsequent evolved systems.

It should be understood that in some embodiments of the present disclosure, "5G" may also be referred to as "5G NR" or "NR".

It should be understood that in the description of embodiments of the present disclosure, the term "correspond" indicates a direct or indirect corresponding relationship between two items, or indicates an associated relationship between two items; and also indicates relationships such as indicating and being indicated, or configuring and being configured.

In the embodiments of the present disclosure, "predefinition" can be achieved by pre-storing corresponding codes, tables, or other means that can be used to indicate relevant information in devices (e.g., including terminal devices and network devices). The specific implementation method is not limited in the present disclosure. For instance, predefinition can refer to what is defined in a protocol.

In the embodiments of the present disclosure, the term "protocol" refers to a standard protocol in the communication field, including, for example, the LTE protocol, the NR protocol, and related protocols applied in the future communication systems, which is not limited in the present disclosure.

**Next, integrated sensing and communication is introduced as follows:**

The next-generation networks, such as the 6$^{th}$ generation (6G) communication network, will be an integration of a mobile communication network, a sensing network, and a computing power network. In a narrow sense, a sensing network refers to a system capable of target localization (range measurement, speed measurement, angle measurement), target imaging, target detection, target tracking, and target identification. In a broader sense, a sensing network encompasses a system that possesses attributes and states of all services, networks, users, terminals, and environmental objects. From the perspective of sensing applications, it includes the following categories:

(1) Outdoor/Wide Area/Local Area Applications: including smart cities (such as weather monitoring), smart transportation/high-speed rail (such as high-precision map construction, road supervision, intrusion detection), low-altitude applications (such as drone monitoring and obstacle avoidance, flight intrusion detection, flight path management), or the like.

(2) Indoor/local applications: including smart home and health management (such as breathing monitoring, intrusion detection, gesture/posture recognition, motion monitoring, mobile trajectory tracking, or the like), smart factories (such as intrusion detection, material detection, item defect detection, or the like).

The above are merely some exemplary classifications of sensing applications, and the scope of sensing

applications is not limited to the examples provided.

Wireless communication and sensing are two significant applications of radio frequency technology. Sensing utilizes radio waves to detect parameters of the physical environment, enabling environmental sensing such as target localization, action recognition, and imaging. Traditional sensing and wireless communication exist independently, and the separated design leads to the waste of wireless spectrum and hardware resources. As we enter the era of beyond 5G (B5G) and 6G, communication spectrum is moving towards millimeter wave, terahertz, and visible light communication. In the future, the spectrum for wireless communication will overlap with the traditional sensing spectrum. The integrated sensing and communication technology integrates the two functions of wireless communication and sensing, allowing the use of wireless resources from wireless communication to fulfill sensing functions; utilizing widely deployed cellular networks to enable sensing services over a larger area; utilizing base stations and a plurality of terminals for joint sensing to achieve higher sensing accuracy; and reusing hardware modules from wireless communication to implement sensing functions, reducing costs. In summary, the integrated sensing and communication technology endows future wireless communication systems with sensing capabilities, laying the foundation for the development of future businesses such as smart transportation, smart cities, smart factories, and drones.

**Next, the structure of the NR frame is introduced as follows:**

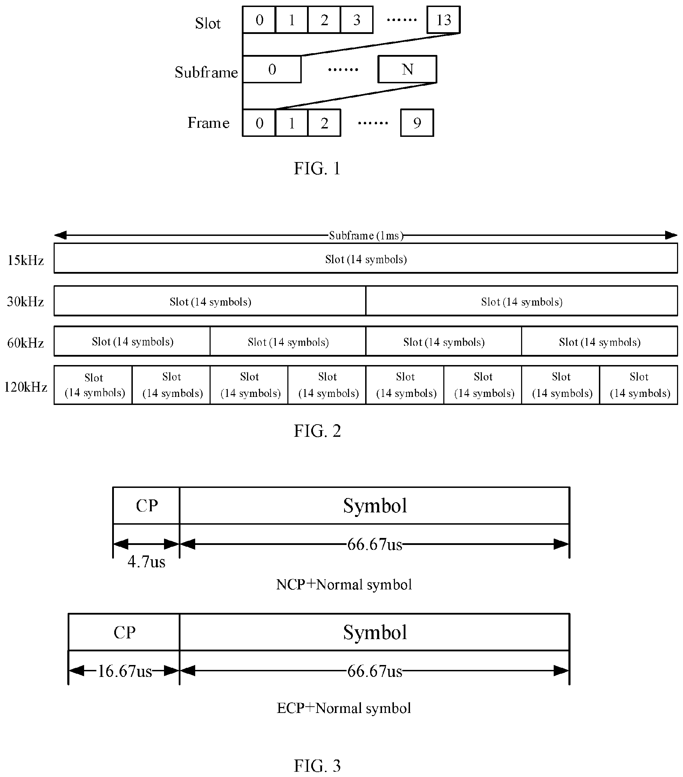

FIG. 1 illustrates a schematic diagram of a frame structure according to the related art. NR supports a flexible Time Division Duplex (TDD) frame structure. Within a frame (10 milliseconds), there are 10 subframes, each with a length of 1 millisecond (ms). Each subframe contains N slots, where the value of N is related to the subcarrier spacing. For example, when the subcarrier spacing is 15 kHz, each subframe contains 1 slot; when the subcarrier spacing is 30 kHz, each subframe contains 2 slots. Each slot contains 14 Orthogonal Frequency Division Multiplexing (OFDM) symbols, or 12 OFDM symbols. Each slot can be configured as a fully downlink slot, a fully uplink slot, or a flexible slot.

FIG. 2 illustrates a schematic diagram of the slot structure according to the related art. Within a 1-millisecond subframe, when the subcarrier spacing is 15kHz, each subframe contains 1 slot; when the subcarrier spacing is 30kHz, each subframe contains 2 slots; when the subcarrier spacing is 60kHz, each subframe contains 4 slots; and when the subcarrier spacing is 120kHz, each subframe contains 8 slots. Each slot includes 14 OFDM symbols.

In cellular communication systems, the introduction of Cyclic Prefix (CP) addresses inter-symbol interference and inter-subcarrier interference caused by multipath effects. CP types include Normal Cyclic Prefix (NCP) and Extended Cyclic Prefix (ECP), with NR only supporting ECP at 60kHz. When the CP type is NCP, each slot includes 14 OFDM symbols; when the CP type is ECP, each slot includes 12 OFDM symbols.

Taking a 15kHz subcarrier spacing as an example, FIG. 3 illustrates a schematic diagram of the cyclic prefix design according to the related art. The NCP length is 4.7 microseconds (us), and the extended cyclic prefix length is 16.67 microseconds.

For NCP: there are 7 OFDM symbols within every 0.5 milliseconds, with the CP length of the first OFDM symbol being 5.21 microseconds and the CP length of the second to seventh OFDM symbols being 4.69 microseconds.

For ECP: there are 6 OFDM symbols within every 0.5 milliseconds, and the CP length of each OFDM symbol is 16.67 microseconds.

**Next, inter-symbol interference is introduced as follows:**

In the base station self-transmitting and self-receiving mode, the maximum sensing distances corresponding to NCP and ECP are shown in Table 1:

Table 1

| Subcarrier (kHz) | 15 | 30 | 60 | 120 |
|---|---|---|---|---|
| Cyclic prefix (us) | 4.69 | 2.34 | 1.17 | 0.58 |
| NCP delay spread range (m) | 703 | 351 | 175 | 87 |
| ECP time delay spread range (m) | 2500 | 1248 | 622 | 309 |

As can be seen from Table 1, as the subcarrier spacing increases, the NCP delay spread range and ECP delay spread range gradually decrease, which means the sensing distance gradually decreases. For some sensing application scenarios, such as low-altitude applications like drone scenarios, the demand for sensing distance is relatively high, and operators may not deploy sensing functions on all base stations, which further increases the demand for sensing distance.

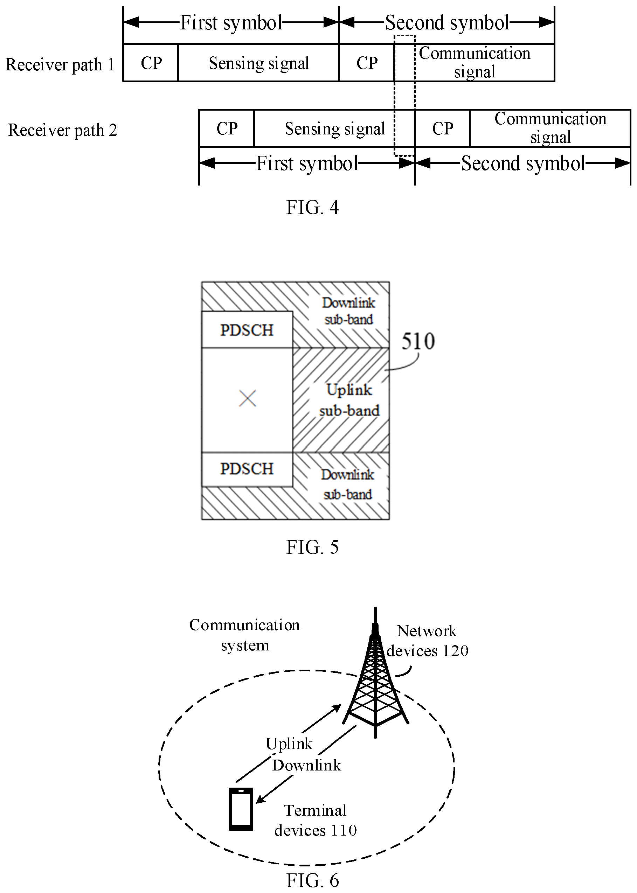

FIG. 4 illustrates a schematic diagram of inter-symbol interference according to the related art. As shown in FIG. 4, as the sensing distance increases, the sampling interval of the first symbol on receiver path 2 will fall within the sampling interval of the second symbol on receiver path 1 (the dashed box part), meaning that the first symbol on receiver path 2 interferes with the second symbol on receiver path 1.

**Next, Cross Division Duplex (XDD) is introduced as follows:**
In related art, data can be simultaneously transmitted and received on different sub-bands within the same subframe. This technology is known as XDD technology or X-division duplex technology, primarily applied on the base station side. The terminal device side still maintains a state where only data transmission or reception is supported within a single subframe.

FIG. 5 illustrates a schematic diagram of the XDD technology according to the related art. The middle sub-band 510 of the frequency domain resources corresponding to a downlink symbol/slot is configured as an uplink sub-band. When a terminal device is configured or instructed to receive data on this downlink symbol/slot, such as receiving data carried on the Physical Downlink Shared Channel (PDSCH), the frequency domain resources occupied by the PDSCH overlap with the uplink sub-band in the frequency domain resources corresponding to the downlink symbol/slot. Since the base station side is in the state of receiving uplink data from other terminal devices in the resource part of the uplink sub-band, the base station side cannot transmit downlink data to the terminal device in this uplink sub-band. That is, the base station side only transmits PDSCH to the terminal device on the downlink sub-bands on both sides of the uplink sub-band.

In some embodiments, a Sub-Band Full Duplex (SBFD) time-domain configuration is proposed based on XDD technology. For example, on a subframe, slot, or symbol configured for downlink, the middle subband of the corresponding frequency domain resource is configured as an uplink subband, allowing the base station to perform both uplink and downlink transmissions on the same subframe. However, the terminal device side usually only uses one subband, and only supports transmitting data or receiving data within the same subframe. The subband configurations for different symbols within a subframe or different slots can be consistent or different, and this is not limited in the embodiments of the present disclosure.

**Next, sensing is introduced as follows:**
The term "sensing" mentioned in the embodiments of the present disclosure refers to the process of directly or indirectly obtaining sensing information about a target or environment based on at least one signal (which may be referred to as a sensing signal) from acoustic waves, electromagnetic waves, or light waves (including but not limited to laser and visible light). Alternatively, it refers to the process of obtaining relevant information of the aforementioned sensing signal through measurement. For example, by transmitting or receiving a sensing signal, measuring the sensing signal, or processing the sensing signal in other ways, sensing information about the target or environment can be obtained, or information processed from the sensing signal can be obtained. Then, the processed information can be transmitted to a control node to achieve services such as localization, range measurement, angle measurement, speed measurement, target imaging, target detection, target tracking, and target identification. Therefore, signals or channels used for the aforementioned functions can be collectively referred to as "sensing signals or sensing channels".

FIG. 6 illustrates a schematic diagram of a communication system 100 according to an exemplary embodiment of the present disclosure. The communication system 100 includes communication devices, such as terminal devices 110 and network devices 120.

The terminal device 110 in the present disclosure is also referred to as a User Equipment (UE), an access terminal, a subscriber unit, a subscriber station, a mobile station, a remote station, a remote terminal, a mobile device, a user terminal, a terminal, a wireless communication device, a user agent, or a user apparatus. The terminal device includes but is not limited to: a handheld device, a wearable device, a vehicle-mounted device, and an IoT device, such as a mobile phone, a tablet computer, an e-book reader, a laptop computer, a desktop computer, a TV, a game console, a Mobile Internet Device (MID), an Augmented Reality (AR) terminal, a Virtual Reality (VR) terminal, a Mixed Reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a Wireless Local Loop (WLL) station, a Personal Digital Assistant (PDA), a Set-Top Box (STB), or a Customer Premise Equipment (CPE).

The network device 120 in the present disclosure provides wireless communication functions, and includes but is not limited to: an Evolved Node B (eNB), a Radio Network Controller (RNC), a Node B (NB), a Base Station Controller (BSC), a Base Transceiver Station (BTS), a home base station (e.g., a home eNB, or a home NB (HNB)), a Baseband Unit (BBU), an Access Point (AP) in a Wi-Fi system, a wireless relay node, a wireless backhaul node, a Transmission Point (TP), or a Transmission and Reception Point (TRP), etc. It can also be the next generation Node B (gNB) or a transmission point (TRP or TP) in 5G mobile communication system, or one or a group of antenna panels (including a plurality of antenna panels) of a base station in a 5G system, or a network node constituting gNB or TP, such as a Baseband Unit (BBU) or a Distributed Unit (DU), etc., or a base station in a B5G mobile communication system or 6G mobile communication system, or a Core Network (CN), a Fronthaul, a Backhaul, a Radio Access Network (RAN), a network slice, etc., or a serving cell, a Primary Cell (PCell), a Primary Secondary Cell (PSCell), a Special Cell (SpCell), a Secondary Cell (SCell), a neighboring cell, or the like of a terminal device.

The terminal device 110 and the network device 120 communicate with each other via an air interface technology, such as a Uu interface.

Illustratively, there are two communication scenarios between the terminal device 110 and the network device

120: an uplink communication scenario and a downlink communication scenario. Uplink communication refers to the terminal device 110 transmitting signals to the network device 120; downlink communication refers to the network device 120 transmitting signals to the terminal device 110.

The technical solutions according to the embodiments of the present disclosure can be applied to various communication systems, such as GSM systems, CDMA systems, WCDMA systems, GPRS, LTE systems, LTE-A systems, LTE Frequency Division Duplex (FDD) systems, LTE TDD systems, UMTS, Worldwide Interoperability for Microwave Access (WiMAX) communication systems, 5G mobile communication systems, NR systems, evolved systems of NR systems, LTE-U systems, NR-U systems, NTN systems, non-NTN systems, WLAN, Wi-Fi, cellular IoT systems, cellular passive IoT systems, as well as subsequent evolved systems of 5G NR systems, and also applicable to B5G, 6G, and subsequent evolved systems.

In some embodiments of the present disclosure, "NR" may also be referred to as a 5G NR system or a 5G system. The 5G mobile communication system may include a Non-Standalone (NSA) networking and/or a Standalone (SA) networking.

The technical solutions according to the embodiments of the present disclosure can also be applied to Machine-Type Communications (MTC), LTE-Machine (LTE-M), Device-to-Device (D2D) networks, Machine-to-Machine (M2M) networks, IoT networks, or other networks. IoT networks can include, for example, the Internet of vehicles (IoV). The communication modes in the IoV system are collectively referred to as Vehicle-to-X (V2X, wherein X represents anything). For example, the V2X communications may include Vehicle-to-Vehicle (V2V) communications, Vehicle-to-Infrastructure (V2I) communications, Vehicle-to-Pedestrian (V2P) communications, or Vehicle-to-Network (V2N) communications.

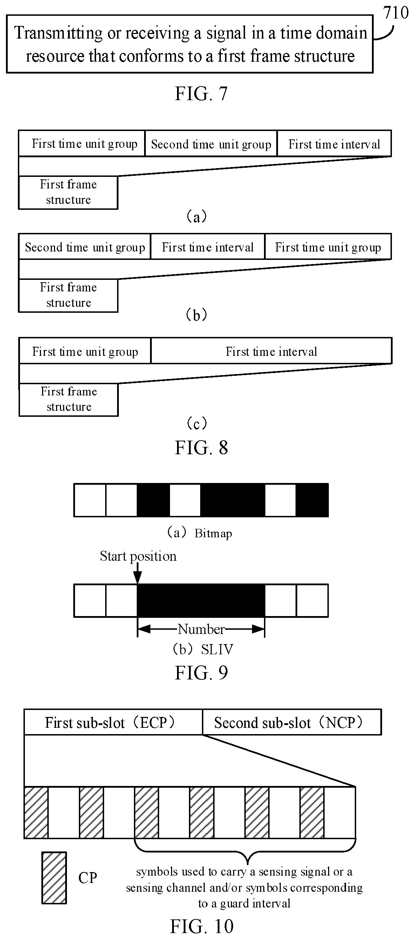

With the continuous development of communication technology, the next-generation network will be an integration of mobile communication networks, sensing networks, and computing power networks. However, in a process of transmitting a sensing signal and a communication signal in the next-generation network, the sensing signal and the communication signal may interfere with each other. To address the interference issue between signals, FIG. 7 illustrates a flowchart of a method for signal transmission according to an exemplary embodiment of the present disclosure. This method is performed by a communication device and includes:

**Step 710:** transmitting or receiving a signal in a time-domain resource that conforms to a first frame structure.

The first frame structure includes at least one of: a first time unit group, a second time unit group, or a first time interval.

In some embodiments, transmitting or receiving a signal in a time-domain resource having characteristics of the first frame structure.

The first frame structure includes at least one of: a first time unit group, a second time unit group, or a first time interval.

In some embodiments, the first time unit group may also be understood as any of the meanings of a set of first time units, a series of first time units, a plurality of first time units, a plurality of consecutive first time units, or the like, such as the N first time units ranked at the top position, or the N first time units ranked at the bottom position, wherein N is a positive integer.

In some embodiments, the first time interval includes flexible time, measurement interval, guard interval, or the like, and the predefined interval is the full set or a subset of the first time interval.

In some embodiments, the communication device acquires configuration information for a first time unit group and a second time unit group, and indirectly acquires relevant information for a first time interval.

In some embodiments, the communication device acquires configuration information for the first time unit group or the second time unit group, and the other time is collectively referred to as the first time interval.

In some embodiments, the first time unit group and the second time unit group are used to carry different signals or channels.

In some embodiments, the first time unit group is used to carry a communication signal or a communication channel, and the second time unit group is used to carry a sensing signal or a sensing channel; or the first time unit group is used to carry a communication signal or a communication channel, and the second time unit group is not used to carry a communication signal or a communication channel; or the second time unit group is used to carry a sensing signal or a sensing channel, and the first time unit group is not used to carry a sensing signal or a sensing channel; or the first time unit group is used to carry a communication signal or a communication channel, and the second time unit group is used to carry a sensing signal or a sensing channel and/or a communication signal or a communication channel; or the first time unit group is used to carry a communication signal or a communication channel, and the second time unit group is used to carry a sensing signal or a sensing channel and a communication signal or a communication channel, with the priority of the communication signal or the communication channel in the second time unit group being lower than that of the sensing signal or the sensing channel.

In some embodiments, the communication signal or communication channel includes, but is not limited to:

downlink signal or downlink channel: at least one of a PDSCH, a Synchronization Signal Block (SSB) (also referred to

as Synchronization Signal/Physical Broadcast Channel (PBCH) block), a Demodulation Reference Signal (DMRS), a Channel State Information Reference Signal (CSI-RS), a Phase Tracking Reference Signal (PT-RS), a Tracking Reference Signal (TRS), or a Positioning Reference Signal (PRS); and

uplink signal or uplink channel: at least one of a Physical Uplink Shared Channel (PUSCH), a Sounding Reference Signal (SRS), or a Physical Uplink Control Channel (PUCCH).

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), and Carrier Phase Reference Signal (CPRS).

In some embodiments, the duration of the first time interval is greater than or equal to the duration of the predefined interval.

In some embodiments, the first time unit group and the second time unit group satisfy at least one of the following constraint conditions: the end time of the second time unit group is not later than a time point that is earlier than the start time of the first time unit group by the predefined interval; the start time of the first time unit group is not earlier than a time point that is later than the end time of the second time unit group by the predefined interval; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first time unit group and the second time unit group satisfy at least one of the following constraint conditions: the end time of the second time unit group is not later than the start time of the predefined interval, and the end time of the predefined interval is not later than the start time of the first time unit group; the start time of the first time unit group is not earlier than the end time of the predefined interval, and the start time of the predefined interval is not earlier than the end time of the second time unit group; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

The aforementioned constraint conditions, by imposing restrictions on the first and second time unit groups, can reduce transmission interference between signals carried within different time unit groups.

In some embodiments, the first frame structure includes a first time unit group, a second time unit group, and a first time interval.

Taking the example of using the first time unit group to carry a communication signal and the second time unit group to carry a sensing signal, for a communication device that supports both communication and sensing, the first frame structure shown in FIG. 8(a) is predefined by the communication protocol or configured by the network device. The communication signal is transmitted or received in the first time unit group, and the sensing signal is transmitted or received in the second time unit group. The first time interval follows the second time unit group.

In some embodiments, the first frame structure includes a first time unit group and a second time unit group, with a first time interval between the first time unit group and the second time unit group.

Taking the example of using the first time unit group to carry a communication signal and the second time unit group to carry a sensing signal, for a communication device that supports both communication and sensing, the first frame structure shown in FIG. 8(b) is predefined by the communication protocol or configured by the network device. The communication signal is transmitted or received in the first time unit group, and sensing signals are transmitted or received in the second time unit group. There is a first time interval between the first time unit group and the second time unit group.

In some embodiments, the first frame structure includes a first time unit group and a first time interval.

In some embodiments, the first frame structure includes a second time unit group and a first time interval.

Taking the first time unit group used to carry a communication signal as an example, for a communication device that only supports communication and does not support sensing, the first frame structure as shown in FIG. 8(c) is predefined by the communication protocol or configured by the network device. The time unit corresponding to the second time unit group is not used, or the time unit corresponding to the second time unit group is not used to carry a communication signal or a communication channel. The communication device transmits or receives the communication signal in the first time unit group. The first time interval follows the first time unit group.

In some embodiments, the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group, a subcarrier spacing corresponding to the second time unit group, a frequency range corresponding to the first time unit group, or a frequency range corresponding to the second time unit group.

Different configurations can correspond to different services. For instance, some configurations are used for wireless communication, and some configurations are used for sensing services, which can be referred to as sensing configurations. These sensing configurations include sensing services, such as various sensing coverage requirements, different sensor configurations, and various sensing algorithms.

When the bandwidths corresponding to the first and second time unit groups are different, additional time is required to adjust the receiving range of the receiver in the communication device.

The Frequency Range (FR) corresponding to the first time unit group and/or the second time unit group includes FR1 or FR2. FR1 is also known as the Sub-6 GHz frequency range, representing the low-frequency range, covering the frequency range from 450 MHz to 6 GHz. FR2 is also known as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, the time unit types respectively corresponding to the first time unit group and the second time unit group are different.

In some embodiments, the time unit type includes a first type adopting NCP and a second type adopting ECP.

Based on the use of the first time unit group for carrying a communication signal or a communication channel, and the second time unit group for carrying a sensing signal or a sensing channel, the different time unit types corresponding to the first and second time unit groups can meet the different business requirements of communication services and sensing services, thereby better supporting communication services or sensing services.

Illustratively, the first time unit group includes at least one symbol, and the second time unit group includes at least one symbol. The symbol length of the symbol (first symbol type) corresponding to the first time unit group is the same as or different from the symbol length of the symbol (second symbol type) corresponding to the second time unit group. The symbol length includes the cyclic prefix. For example, both the first symbol type and the second symbol type adopt NCP or both adopt ECP. Adopting ECP is simpler, but the resource utilization efficiency is lower. Alternatively, the first symbol type adopts NCP, and the second symbol type adopts ECP. Adopting ECP can increase the sensing coverage distance.

In some embodiments, time unit types respectively corresponding to a part of the first time unit group and another part of the first time unit group are different; and/or time unit types respectively corresponding to a part of the second time unit group and another part of the second time unit group are different.

For example, the first time unit group corresponds to the first type, and the second time unit group corresponds to the second type.

For another example, the first time unit group corresponds to the first type, a part of the second time unit group corresponds to the first type, and another part of the second time unit group corresponds to the second type.

For another example, a part of the first time unit group corresponds to the first type, and a part of the second time unit group corresponds to the second type; a part of the second time unit group corresponds to the first type, and another part of the second time unit group corresponds to the second type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different time unit types can better support communication services or sensing services.

In some embodiments, each of the first time unit group and the second time unit group includes at least one time unit, where the time unit includes at least one of: frame, subframe, slot, sub-slot, symbol group, or symbol. In the embodiments of the present disclosure, the time unit is exemplified as a symbol for illustration.

In some embodiments, the first time interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal. In the case where the signal or channel carried in the first time unit group is not in the same direction as the signal or channel carried in the second time unit group, the measurement interval required for switching a transmission direction is greater than or equal to the first time interval.

In the case where the first time interval is a subset of at least one of the aforementioned time periods, the other time periods within the aforementioned time periods, excluding the first time interval, are used for other functions. For example, the start time period and the end time period are used for other functions, and the intermediate time period is the first time interval.

In some embodiments, the first time interval is at least one of a guard interval, a flexible time, or a measurement interval.

In some embodiments, the first time interval is greater than or equal to a predefined interval. The predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal. In the case where the signal or channel carried in the first time unit group is not in the same direction as the signal or channel carried in the second time unit group, the measurement interval required for switching a transmission direction is greater than or equal to the predefined interval.

In the case where the predefined interval is a subset of at least one of the aforementioned time periods, the other time periods within the aforementioned time periods, excluding the predefined interval, are used for other functions. For example, the start time period and the end time period are used for other functions, and the intermediate time period is the predefined interval.

In some embodiments, the predefined interval is at least one of a cyclic prefix or a guard interval.

In scenarios where the first time interval (or predefined interval) is at least one of the aforementioned time periods, or where the first time interval (or predefined interval) is a subset of at least one of these time periods, configuring the first time interval (or predefined interval) based on different scenarios aligns more closely with practical needs. For instance, configuring the first time interval (or predefined interval) as a measurement interval allows communication devices that only support communication and not sensing to utilize the first time interval (or predefined interval) without requiring sensing-related information.

**First frame structure:**

FIG. 8(a) illustrates a schematic diagram of the first frame structure according to an exemplary embodiment of the present disclosure. The first frame structure 1 is specified by a communication protocol or configured by a network device. In the first frame structure 1, the first time unit group precedes the second time unit group, and the first time interval follows the second time unit group.

Taking the first frame structure as a slot structure, where the first time unit group includes at least one symbol and the second time unit group includes at least one symbol, and the first time interval is a guard interval as an example, in slot structure 1, the symbol (first symbol type) corresponding to the first time unit group comes first, the symbol (second symbol type) corresponding to the second time unit group comes after the first symbol type, and the guard interval comes after the second symbol type.

FIG. 8(b) illustrates a schematic diagram of the first frame structure according to an exemplary embodiment of the present disclosure. The first frame structure 2 is specified by a communication protocol or configured by a network device. In the first frame structure 2, the second time unit group precedes the first time unit group, with a first time interval between the second time unit group and the first time unit group.

Taking the first frame structure as a slot structure, where the first time unit group includes at least one symbol and the second time unit group includes at least one symbol, and the first time interval is a guard interval as an example, in slot structure 2, the symbol (second symbol type) corresponding to the second time unit group comes first, followed by the symbol (first symbol type) corresponding to the first time unit group, with the guard interval between the second symbol type and the first symbol type.

In some embodiments, at least one of time-domain information of the first time unit group, time-domain information of the second time unit group, or time-domain information of the first time interval is specified by the communication protocol or configured by the network device.

In some embodiments, the time-domain information of the first time unit group, the second time unit group, or the first time interval includes at least one of: a start time (or a start position), an end time (or an end position), an absolute time length, a number of occupied time units, or a time-domain position of the occupied time units.

Based on the above information, when indicating the first time unit group, the second time unit group, or the first time interval, bits for indication can be saved. For example, when the first time unit group is at the beginning or end of the first slot, only indicating the absolute time length (or the number of occupied time units) is more economical compared to indicating the end time (or end position), start time (or start position), and absolute time length (or the number of occupied time units). The number of occupied time units can be the number of occupied slots, or the number of occupied symbols, or both the number of occupied slots and the number of occupied symbols. For example, N slots are occupied, and the first M symbols of the slot following the $N^{th}$ slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; and the first time interval is from the end time of the second time unit group to the end time of the first frame structure.

Taking the first frame structure as the slot structure, where the first time unit group includes at least one symbol and the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and corresponds to the first symbol type; the second time unit group starts after the end of the symbols of the last first time unit group and occupies Y symbols, and corresponds to the second symbol type; the guard interval is from the end of the symbols of the last second time unit group to the end time of the first slot; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 2:

Table 2

| Configuration | The first symbol type (Symbol count or absolute time $T_c$) | Second symbol type (Symbol count or absolute time $T_c$) | Guard interval (Absolute time $T_c$) |
|---|---|---|---|
| 0 | 12 or 26336*64 | 1 or 2560*64 | 1824*64 |
| 1 | 11 or 24144*64 | 2 or 5120*64 | 1456*64 |
| 2 | 10 or 21952*64 | 3 or 7680*64 | 1088*64 |
| 3 | 9 or 19760*64 | 4 or 10240*64 | 720*64 |
| 4 | 9 or 19760*64 | 3 or 7680*64 | 3280*64 |
| 5 | 8 or 17568*64 | 4 or 10240*64 | 2192*64 |
| 6 | 7 or 15360*64 | 5 or 12800*64 | 2560*64 |

The calculation rules for the first symbol type time, the second symbol type time, and the guard interval time are as follows:

$$\text{First symbol type time} = \begin{cases} 2192*64*X+16*64 & X<7 \\ 2192*64*X+32*64 & X\geq 7 \end{cases};$$

$$\text{Second symbol type time} = 2560*64*Y;$$

$$\text{Guard interval time} = 30720*64 - \text{the first symbol type time} - \text{the second symbol type time}.$$

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the second time unit group occupies Y time units from the start time of the first frame structure; the first time unit group occupies X time units forward from the end time of the first frame structure; and the first time interval exists between the second time unit group and the first time unit group.

Taking the first frame structure as the slot structure, where the first time unit group includes at least one symbol, the second time unit group includes at least one symbol, and the first time interval is the guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the second time unit group occupies Y symbols from the start time of the first slot, and corresponds to the second symbol type; the first time unit group occupies X symbols counting backwards from the end time of the first slot, and corresponds to the first symbol type; a guard interval exists between the second time unit group and the first time unit group; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 3:

Table 3

| Configuration | Second symbol type (Symbol count or absolute time $T_c$) | Guard interval (Absolute time $T_c$) | The first symbol type (Symbol count or absolute time $T_c$) |
|---|---|---|---|
| 0 | 1 or 2560*64 | 1840*64 | 12 or 26320*64 |
| 1 | 2 or 5120*64 | 1472*64 | 11 or 24128*64 |
| 2 | 3 or 7680*64 | 1104*64 | 10 or 21936*64 |
| 3 | 4 or 10240*64 | 736*64 | 9 or 19744*64 |
| 4 | 4 or 10240*64 | 2928*64 | 8 or 17552*64 |
| 5 | 5 or 12800*64 | 2560*64 | 7 or 15360*64 |
| 6 | 6 or 15360*64 | 2208*64 | 6 or 13152*64 |

The calculation rules for the first symbol type time, the second symbol type time, and the guard interval time are as follows:

$$\text{First symbol type time} = \begin{Bmatrix} 2192*64*X & X\leq 7 \\ 2192*64*X+16*64 & X>7 \end{Bmatrix};$$

$$\text{Second symbol type time} = 2560*64*Y;$$

$$\text{Guard interval time} = 30720*64 - \text{first symbol type time} - \text{second symbol type time}.$$

In some embodiments, X and Y are positive integers, and the sum of X and Y is less than or equal to 14. $T_c$ represents the basic time unit of the NR system.

In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.

In some embodiments, the subcarrier spacings respectively corresponding to the first time unit group and the second time unit group are different.

Subcarrier spacing refers to the frequency spacing between adjacent subcarriers in an OFDM system. In an OFDM system, data is allocated to a plurality of parallel subcarriers for transmission, with each subcarrier corresponding to an independent frequency.

Illustratively, the first time unit group corresponds to subcarrier spacing 1, and the second time unit group corresponds to subcarrier spacing 2. Subcarrier spacing 1 is 15kHz, and subcarrier spacing 2 is 30kHz.

According to different communication requirements or different sensing requirements, different subcarrier spacings are set to better support communication services or sensing services.

In some embodiments, the subcarrier spacings respectively corresponding to a part of the first time unit group

and another part of the first time unit group are different; and/or
the subcarrier spacings respectively corresponding to a part of the second time unit group and another part of the second time unit group are different.

For example, the first time unit group corresponds to the first subcarrier spacing type, and the second time unit group corresponds to the second subcarrier spacing type.

For another example, the first time unit group corresponds to the first subcarrier spacing type, a part of the second time unit group corresponds to the first subcarrier spacing type, and another part of the second time unit group corresponds to the second subcarrier spacing type.

For another example, a part of the first time unit group corresponds to the first subcarrier spacing type, and a part of the second time unit group corresponds to the second subcarrier spacing type; a part of the second time unit group corresponds to the first subcarrier spacing type, and another part of the second time unit group corresponds to the second subcarrier spacing type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different types of subcarrier spacing can better support communication services or sensing services.

Using the first frame structure as the slot structure, the first time unit group includes at least one symbol, and the second time unit group includes at least one symbol. The first time interval is the guard interval, the subcarrier spacing corresponding to the first time unit group is 15kHz, and the subcarrier spacing corresponding to the second time unit group is 30kHz. The time unit is symbol, and both the first symbol type and the second symbol type adopt ECP as an example. The configuration is shown in Table 4:

Table 4

| Configuration | First symbol type (symbol number) | Second symbol type (symbol count) |
|---|---|---|
| 0 | 11 | 1 |
| 1 | 10 | 2 |
| 2 | 9 | 3 |
| 3 | 8 | 4 |
| 4 | 7 | 5 |
| 5 | 6 | 6 |

The guard interval time = total length of the slot - number of symbols of the first symbol type - number of symbols of the second symbol type. Table 4 is an example calculation based on the sum of X and Y being 12. The sum of X and Y may also be 13, 11, or the like, which is not limited in the embodiments of the present disclosure.

In some embodiments, the duration of the predefined interval is less than or equal to the duration of the first time interval, and the predefined interval is specified by the communication protocol; alternatively, the predefined interval is configured by the network device.

In some embodiments, the predefined interval is determined from a plurality of candidate intervals specified by the communication protocol or configured by the network device.

The network device configures the predefined interval through high-level signaling or physical layer signaling. The high-level refers to the protocol layers above the physical layer.

In a case where specified by the communication protocol, no network device configuration is required, thereby saving signaling; and in a case where configured by the network device, diverse configuration manners are supported, allowing for configuration according to actual needs.

In some embodiments, at least one of the first time unit group, the second time unit group, or the first time interval constitutes a time unit group set. The time unit group set occurs periodically.

In some embodiments, the method further includes: transmitting or receiving time-domain configuration information. The time-domain configuration information is used to configure a time-domain position of a time unit group set in at least one period.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, the first time unit group and the first time interval constitute a time unit group set.

In some embodiments, the second time unit group and the first time interval constitute a time unit group set.

In some embodiments, in a case where only the first time unit group (or the second time unit group) is configured, the other time in the time unit group set is the first time interval, that is, the first time interval is implicitly configured or indicated.

In some embodiments, the time unit group set is at least one of a frame, a subframe, a slot, a sub-slot, or a symbol group.

In some embodiments, the time-domain position of the time unit group set in at least one period is configured in at least one of the following manners:

(1) a bitmap manner; or
(2) a Start and Length Indicator Value (SLIV) manner.

Illustratively, in each of at least one period, there are N slots, wherein N is a positive integer. Each of the N slots is referred to as a time unit group set, or a set of time units. FIG. 9 illustrates a schematic diagram of the configuration manner of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For instance, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The embodiments of the present disclosure do not impose any restrictions on this. M is a positive integer and is less than or equal to N.

In a case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and there are four first slots, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the remaining time-domain resources being time-domain resources occupied by the second type of first slot.

Alternatively, the sum of at least two types of first slots can be configured using any of the aforementioned configuration manners, and then the time-domain resources occupied by the second type of first slot can be configured using any of the configuration manners, with the remaining time-domain resources being time-domain resources occupied by the first type of first slot.

By configuring the time-domain positions of a time unit group set in at least one period using the bitmap manner, the configuration of the time unit group set can be more flexible. By configuring the time-domain positions of a time unit group set in at least one period using the SLIV manner, the configuration is more concise and easier to manage, suitable for simpler configuration requirements.

In the above embodiment, the first slot is taken as an example, but it could also be the first sub-slot, the first symbol group, or other time-domain resources. The embodiments of the present disclosure are not limited to this.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or individual in space or on a map. Localization involves using data measured by sensors, such as Global Positioning System

(GPS) data or LiDAR data, to calculate the position of the object.

Range measurement refers to measuring the distance between an object and a reference point using sensors or technology. Common range measurement methods include using GPS, laser range measurement, ultrasonic waves, or the like.

Angle measurement refers to measuring the direction or angle of an object using sensors or technology. Digital compasses, gyroscopes, angle sensors, and the like are commonly used for angle measurement.

Speed measurement refers to measuring the moving speed of an object using sensors or technology. Speed measurement can be achieved through various methods, such as using radar speedometers, GPS speed measurement, photoelectric sensors, or the like.

Target imaging refers to capturing images or data of a target using sensors such as cameras, radar, or the like. Target imaging technology can provide visual information about the target, such as thermal imaging cameras used for infrared imaging.

Target detection refers to automatically detecting target objects in the environment through the analysis of sensor data. Target detection is typically implemented by identifying characteristics such as location, shape, and size of the objects using computer vision and pattern recognition techniques.

Target tracking refers to tracking position and motion of an object across continuous time and space. Target tracking utilizes sensor data and motion models to predict and estimate the trajectory of the object.

Target identification refers to the process of recognizing and classifying detected targets. Target identification often employs computer vision and pattern recognition techniques to match the characteristics of the targets with predefined patterns or databases, thereby determining the identity of the targets.

In some embodiments, the sensing signal or the sensing channel may serve as a reference signal for at least one of sensing, localization, range measurement, angle measurement, speed measurement, target imaging, target detection, target tracking, or target identification.

In some embodiments, some or all symbols in the first slot are used to carry a sensing signal or a sensing channel, and/or all symbols in the second slot are used to carry a communication signal or a communication channel.

In some embodiments, in the first slot, symbols used to carry a sensing signal or a sensing channel and/or symbols corresponding to a guard interval are specified by a communication protocol or configured by a network device, and other symbols in the first slot are used to carry a communication signal or a communication channel; or

In the first slot, symbols used to carry a communication signal or a communication channel and/or symbols corresponding to a guard interval are specified by a communication protocol or configured by a network device, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all of the symbols in the first sub-slot are used to carry a sensing signal or a sensing channel, and/or all of the symbols in the second sub-slot are used to carry a communication signal or a communication channel.

In some embodiments, in the first sub-slot, symbols used to carry a sensing signal or a sensing channel and/or symbols corresponding to a guard interval are specified by a communication protocol or configured by a network device, and other symbols in the first sub-slot are used to carry a communication signal or a communication channel; or

In the first sub-slot, symbols used to carry a communication signal or a communication channel and/or symbols corresponding to a guard interval are specified by a communication protocol or configured by a network device, and other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. White squares represent symbols, and squares filled with diagonal lines represent CPs. In this configuration, the sub-slot length is half of the slot length, that is, the first sub-slot adopting ECP includes 6 symbols, and the second sub-slot adopting NCP includes 7 symbols. At least one of the following configurations is performed by a

network device:

(1) The four symbols preceding the end time of the first sub-slot are symbols used to carry a sensing signal or a sensing channel, and/or symbols corresponding to the guard interval; alternatively, the four symbols preceding the end time of the first sub-slot are symbols corresponding to the guard interval.
(2) The two symbols from the start time of the first sub-slot are used to carry a communication signal or a communication channel; or the two symbols from the start time of the first sub-slot are symbols not used to carry a sensing signal or a sensing channel.
(3) Starting from the third symbol of the first sub-slot, three consecutive symbols are symbols used to carry a sensing signal or a sensing channel, and the last symbol is the symbol corresponding to the guard interval; alternatively, the two symbols from the start time of the first sub-slot are used to carry a communication signal or a communication channel, and the last symbol is the symbol corresponding to the guard interval.

In summary, the method according to the embodiments involves transmitting or receiving signals in time-domain resources that conforms to the first frame structure, wherein the first frame structure includes at least one of a first time unit group, a second time unit group, or a first time interval. In a case where the first time interval exists between the first time unit group and the second time unit group, transmission interference between signals carried in different time unit groups can be reduced.

The method according to the embodiments also determines the time-domain positions of different time unit groups and the first time interval by using symbol numbers, which reduces the computational complexity compared to determining the time-domain positions of different time unit groups and the first time interval using absolute time.

The method according to the embodiments also increase the coverage range of the sensing signal by adopting ECP. The second time unit group is a time unit group used to carry a sensing signal or a sensing channel.

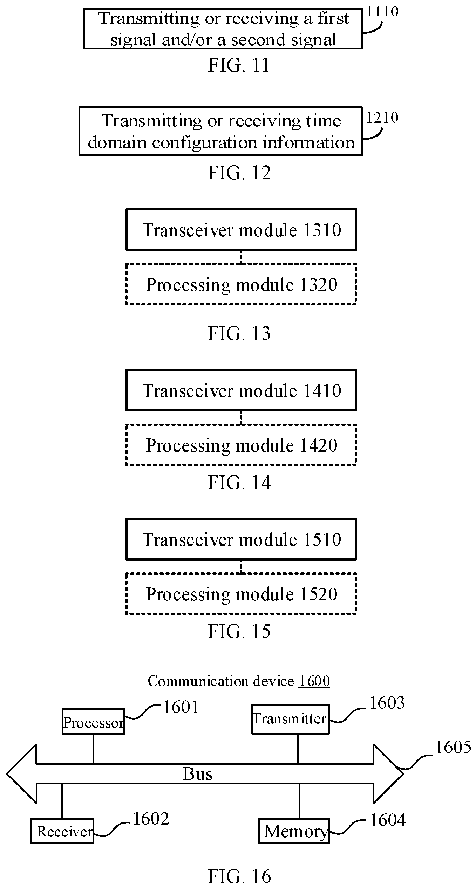

FIG. 11 illustrates a flowchart of a method for signal transmission according to an exemplary embodiment of the present disclosure. The method is performed by a communication device. The method includes the following step:

**Step 1110:** transmitting or receiving a first signal and/or a second signal.

The time interval between the first signal and the second signal includes a predefined interval.

In some embodiments, the communication device includes a terminal device and a network device. The network device transmits a first signal, and the terminal device receives the first signal.

In some embodiments, the communication device includes a terminal device and a network device. The network device transmits a second signal, and the terminal device receives the second signal.

In some embodiments, the communication device includes a terminal device and a network device. The network device transmits a first signal and a second signal, and the terminal device receives both the first and second signals.

In some embodiments, the communication device includes a first terminal device, a second terminal device, and a third terminal device. The third terminal device transmits a first signal and a second signal, the first terminal device receives the first signal, and the second terminal device receives the second signal.

In some embodiments, the first time interval includes flexible time, measurement interval, guard interval, or the like, and the predefined interval is the full set or a subset of the first time interval.

In some embodiments, the first signal and the second signal satisfy at least one of the following constraint conditions: the end time of the second signal is not later than a time point that is earlier than the start time of the first signal by the predefined interval; the start time of the first signal is not earlier than a time point that is later than the end time of the second signal by the predefined interval; the time interval between the start time of the first signal and the end time of the second signal is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first signal and the second signal satisfy at least one of the following constraint conditions: the end time of the second signal is not later than the start time of the predefined interval, and the end time of the predefined interval is not later than the start time of the first signal; the start time of the first signal is not earlier than the end time of the predefined interval, and the start time of the predefined interval is not earlier than the end time of the second signal; the time interval between the start time of the first signal and the end time of the second signal is not shorter than the predefined interval.

Not later than can be equivalently expressed as earlier than or equal to, not earlier than can be equivalently expressed as later than or equal to, and not shorter than can be equivalently expressed as longer than or equal to.

The aforementioned constraint conditions can reduce transmission interference between the first signal and the second signal by imposing restrictions on them.

In some embodiments, the predefined interval is associated with at least one of the following factors: different configurations, a bandwidth corresponding to the first signal, a bandwidth corresponding to the second signal, a transmit power corresponding to the first signal, a transmit power corresponding to the second signal, a subcarrier spacing

corresponding to the first signal, a subcarrier spacing corresponding to the second signal, a frequency range corresponding to the first signal, or a frequency range corresponding to the second signal.

Different configurations can correspond to different services. For instance, some configurations are used for wireless communication, and others are used for sensing services, which can be referred to as sensing configurations, including sensing services such as different sensing coverage requirements, different sensor configurations, and different sensing algorithms.

When the bandwidths corresponding to the first signal and the second signal are different, additional time is required to adjust the receiving range of the receiver in the communication device.

The frequency range FR corresponding to the first signal and/or the second signal includes FR1 or FR2. FR1 is also referred to as the Sub-6 GHz frequency range, representing the low-frequency range, covering the frequency range from 450 MHz to 6 GHz. FR2 is also referred to as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, the time unit types respectively corresponding to the first signal and the second signal are different.

In some embodiments, the time unit type includes a first type adopting NCP and a second type adopting ECP.

Based on the first signal being a communication signal and the second signal being a sensing signal, the different types of time units corresponding to the first and second signals can meet the different service requirements of communication services and sensing services, thereby better supporting either communication services or sensing services.

Illustratively, the time-domain resources occupied by the first signal include at least one symbol, and the time-domain resources occupied by the second signal also include at least one symbol. The symbol length of the symbol corresponding to the first signal (first symbol type) and the symbol corresponding to the second signal (second symbol type) may be the same or different, and the symbol length includes a cyclic prefix. For example, both the first symbol type and the second symbol type adopt NCP or both adopt ECP. Adopting ECP is simpler, but the resource utilization efficiency is lower; alternatively, the first symbol type adopts NCP and the second symbol type adopts ECP. Adopting ECP can increase the sensing coverage distance.

In some embodiments, time unit types respectively corresponding to a part of the first signal and another part of the first signal are different; and/or

The time unit types respectively corresponding to a part of the second signal and another part of the second signal are different.

For example, the first signal corresponds to the first type, and the second signal corresponds to the second type.

For another example, the first signal corresponds to the first type, a part of the second signal corresponds to the first type, and another part of the second signal corresponds to the second type.

For another example, a part of the first signal corresponds to the first type, and a part of the second signal corresponds to the second type; a part of the second signal corresponds to the first type, and another part of the second signal corresponds to the second type.

Different communication services or different sensing services have different requirements for signals. Therefore, different parts of the first signal can be applied to communication services with different requirements, and/or different parts of the second signal can be applied to sensing services with different requirements. Respectively corresponding to different time unit types can better support communication services or sensing services.

In some embodiments, the first time unit group is the time-domain resource allowed to be occupied by the first signal, and the second time unit group is the time-domain resource allowed to be occupied by the second signal. Each of the first time unit group and the second time unit group includes at least one time unit. The time unit includes at least one of a frame, a subframe, a slot, a sub-slot, a symbol group, or a symbol. In the embodiments of the present disclosure, the time unit is exemplified as a symbol for illustration.

In some embodiments, the first time interval is greater than or equal to a predefined interval, and the first time interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal. In the case where the first signal and the second signal are not in the same direction, the measurement interval required for switching the transmission direction is greater than or equal to the first time interval.

In the case where the first time interval is a subset of at least one of the aforementioned time periods, the other time periods within the aforementioned time periods, excluding the first time interval, are utilized for other functions. For instance, the start time period and the end time period are utilized for other functions, and the intermediate time period is the first time interval.

In some embodiments, the first time interval is at least one of a guard interval, a flexible time, or a measurement interval.

In some embodiments, the predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or a network device, or is implicitly defined by a constraint condition of a sensing signal or a communication signal; and in the case where the first signal and the second signal are not in the same direction, the measurement interval required for switching the transmission direction is greater than or equal to the predefined interval.

In the case where the predefined interval is a subset of at least one of the time periods, the other time periods excluding the predefined interval are used for other functions. For example, the start time period and the end time period is used for other functions, and the intermediate time period is the predefined interval.

In some embodiments, the predefined interval is at least one of a cyclic prefix or a guard interval.

In scenarios where the first time interval (or predefined interval) is at least one of the aforementioned time periods, or where the first time interval (or predefined interval) is a subset of at least one of these time periods, configuring the first time interval (or predefined interval) based on different scenarios aligns more closely with practical needs. For instance, configuring the first time interval (or predefined interval) as a measurement interval allows communication devices that only support communication and not sensing to utilize this interval without requiring sensing-related information.

In some embodiments, the first time unit group is the time-domain resource allowed to be occupied by the first signal, and the second time unit group is the time-domain resource allowed to be occupied by the second signal. The first time unit group and the second time unit group are used to carry different signals or channels.

In some embodiments, the first time unit group can also be understood as any of the meanings of a set of first time units, a series of first time units, a plurality of first time units, a plurality of consecutive first time units, or the like, such as the N first time units ranked in the front position, or the N first time units ranked in the back position, wherein N is a positive integer.

In some embodiments, the first time unit group is used to carry a communication signal or a communication channel, and the second time unit group is used to carry a sensing signal or a sensing channel; or

the first time unit group is used to carry a communication signal or a communication channel, and the second time unit group is not used to carry a communication signal or a communication channel; or
the second time unit group is used to carry a sensing signal or a sensing channel, and the first time unit group is not used to carry a sensing signal or a sensing channel; or
the first time unit group is used to carry a communication signal or a communication channel, and the second time unit group is used to carry a sensing signal or a sensing channel and/or a communication signal or a communication channel; or
the first time unit group is used to carry a communication signal or a communication channel, and the second time unit group is used to carry both a sensing signal or a sensing channel and a communication signal or a communication channel. In the second time unit group, the priority of the communication signal or the communication channel is lower than that of the sensing signal or the sensing channel.

In some embodiments, the communication device acquires configuration information for a first time unit group and a second time unit group, and acquires relevant information for a first time interval through calculation.

In some embodiments, the communication device acquires configuration information for the first time unit group, and the other time is collectively referred to as the first time interval.

In some embodiments, the communication signal or communication channel includes, but is not limited to:

downlink signal or downlink channel: at least one of PDSCH, SSB, DMRS, CSI-RS, PT-RS, TRS, or PRS; and
uplink signal or uplink channel: at least one of PUSCH, SRS, or PUCCH.

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), or CPRS.

For specific details of the first frame structure, reference is made to the embodiments shown in FIG. 8, and details are not described herein any further.

In some embodiments, the first frame structure includes a first time unit group, a second time unit group, and a first time interval.

Taking the example of using the first time unit group to carry a communication signal and the second time unit

group to carry a sensing signal, for a communication device that supports both communication and sensing, the first frame structure shown in FIG. 8(a) is predefined by the communication protocol or configured by the network device. The communication signal is transmitted or received in the first time unit group, and the sensing signal is transmitted or received in the second time unit group. The first time interval follows the second time unit group.

In some embodiments, the first frame structure includes a first time unit group and a second time unit group, with a first time interval between the first time unit group and the second time unit group.

Taking the example of using the first time unit group to carry a communication signal and the second time unit group to carry a sensing signal, for a communication device that supports both communication and sensing, the first frame structure shown in FIG. 8(b) is predefined by the communication protocol or configured by the network device. The communication signal is transmitted or received in the first time unit group, and the sensing signal is transmitted or received in the second time unit group. There is a first time interval between the first time unit group and the second time unit group.

In some embodiments, the first frame structure includes a first time unit group and a first time interval.

In some embodiments, the first frame structure includes a second time unit group and a first time interval.

Taking the first time unit group used to carry a communication signal as an example, for a communication device that only supports communication and does not support sensing, the first frame structure shown in FIG. 8(c) is predefined by the communication protocol or configured by the network device. The time unit corresponding to the second time unit group is not used, or the time unit corresponding to the second time unit group is not used to carry a communication signal or a communication channel. The communication device transmits or receives a communication signal in the first time unit group. The first time interval follows the first time unit group.

In some embodiments, at least one of time-domain information of the first time unit group, time-domain information of the second time unit group, or time-domain information of the first time interval is specified by the communication protocol or configured by the network device, where the first time interval is greater than or equal to a predefined interval.

The first time unit group refers to the time-domain resource allowed to be occupied by the first signal, and the second time unit group refers to the time-domain resource allowed to be occupied by the second signal.

In some embodiments, the time-domain information of the first time unit group, the second time unit group, or the first time interval includes at least one of: a start time (or a start position), an end time (or an end position), an absolute time length, a number of occupied time units, or a time-domain position of the occupied time units.

Based on the above information, when indicating the first time unit group, the second time unit group, or the first time interval, bits for indication can be saved. For example, when the first time unit group is at the beginning or end of the first slot, only indicating the absolute time length (or the number of occupied time units) is more economical compared to indicating the end time (or end position), start time (or start position), and absolute time length (or the number of occupied time units). The number of occupied time units can be the number of occupied slots, or the number of occupied symbols, or both the number of occupied slots and the number of symbols. For example, N slots are occupied, and the first M symbols of the slot following the $N^{th}$ slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; the time interval from the end time of the second time unit group to the end time of the first frame structure is the first time interval.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and the first time unit group corresponds to the first symbol type; the second time unit group starts after the end of the symbols of the last first time unit group and occupies Y symbols, and the second time unit group corresponds to the second symbol type; the guard interval is from the end of the symbols of the last second time unit group to the end time of the first slot; X and Y are positive integers, and the sum of X and Y is less than or equal to 14 (NCP) or 12

(ECP).

Taking the example of a subcarrier spacing of 15kHz, with time units being symbols, where the second symbol type adopts ECP and the first symbol type adopts NCP, the configuration is as shown in Table 2, and is not elaborated further here.

The calculation rules for the first symbol type time, the second symbol type time, and the guard interval time are as follows:

$$\text{First symbol type time} = \begin{cases} 2192*64*X+16*64 & X<7 \\ 2192*64*X+32*64 & X\geq 7 \end{cases};$$

$$\text{Second symbol type} = 2560*64*Y;$$

$$\text{Guard interval time} = 30720 * 64 - \text{the first symbol type time} - \text{the second symbol type time}.$$

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the second time unit group occupies Y time units from the start time of the first frame structure; the first time unit group occupies X time units forward from the end time of the first frame structure; and the first time interval exists between the second time unit group and the first time unit group.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the second time unit group occupies Y symbols from the start time of the first slot, and the second time unit group corresponds to the second symbol type; the first time unit group occupies X symbols counting backwards from the end time of the first slot, and corresponds to the first symbol type; a guard interval exists between the second time unit group and the first time unit group; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 3, and is not further elaborated here.

The calculation rules for the first symbol type time, the second symbol type time, and the guard interval time are as follows:

$$\text{First symbol type time} = \begin{cases} 2192*64*X & X\leq 7 \\ 2192*64*X+16*64 & X>7 \end{cases};$$

$$\text{Second symbol type time} = 2560*64*Y;$$

$$\text{Guard interval time} = 30720*64 - \text{first symbol type time} - \text{second symbol type time}.$$

In some embodiments, X and Y are positive integers, and the sum of X and Y is less than or equal to 14. $T_c$

represents the basic time unit of the NR system.

In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.

In some embodiments, the subcarrier spacings respectively corresponding to the first signal and the second signal are different.

Subcarrier spacing refers to the frequency spacing between adjacent subcarriers in an OFDM system. In an OFDM system, data is allocated to a plurality of parallel subcarriers for transmission, with each subcarrier corresponding to an independent frequency.

Illustratively, the first signal corresponds to subcarrier spacing 1, and the second signal corresponds to subcarrier spacing 2, with subcarrier spacing 1=15 kHz and subcarrier spacing 2=30 kHz.

According to different communication requirements or different sensing requirements, different subcarrier spacings are set to better support communication services or sensing services.

In some embodiments, subcarrier spacings respectively corresponding to a part of the first signal and another part of the first signal are different; and/or

the subcarrier spacings respectively corresponding to a part of the second signal and another part of the second signal are different.

For example, the first signal corresponds to the first subcarrier spacing type, and the second signal corresponds to the second subcarrier spacing type.

For another example, the first signal corresponds to the first subcarrier spacing type, a part of the second signal corresponds to the first subcarrier spacing type, and another part of the second signal corresponds to the second subcarrier spacing type.

For another example, a part of the first signal corresponds to the first subcarrier spacing type, and a part of the second signal corresponds to the second subcarrier spacing type; a part of the second signal corresponds to the first subcarrier spacing type, and another part of the second signal corresponds to the second subcarrier spacing type.

Different communication services or different sensing services have different requirements for signals; and therefore, different parts of the first signal may be applied to communication services with different requirements, and/or different parts of the second signal can be applied to sensing services with different requirements. Respectively corresponding to different types of subcarrier spacing can better support communication services or sensing services.

Using the first frame structure as the slot structure, the first time unit group includes at least one symbol, and the second time unit group includes at least one symbol. The first time interval is the guard interval, the subcarrier spacing corresponding to the first signal is 15kHz, and the subcarrier spacing corresponding to the second signal is 30kHz. The time unit is the symbol, and both the first symbol type and the second symbol type adopt ECP as an example. The configuration is shown in Table 4, which is not elaborated here. The guard interval time = total length of slot - number of symbols of the first symbol type - number of symbols of the second symbol type. Table 4 is calculated based on the example where the sum of X and Y is 12, and the sum of X and Y may also be 13, 11, or the like, which is not limited in the embodiments of the present disclosure.

In some embodiments, the predefined interval is specified by the communication protocol; alternatively, the predefined interval is configured by the network device.

In some embodiments, the predefined interval is determined from a plurality of candidate intervals specified by the communication protocol or configured by the network device.

The network device configures the predefined interval through high-level signaling or physical layer signaling. The high-level refers to the protocol layers above the physical layer.

In a case where specified by the communication protocol, no network device configuration is required, thereby saving signaling; and in a case where configured by the network device, diverse configuration manners are supported, allowing for configuration according to actual needs.

In some embodiments, the first time unit group is the time-domain resource allowed to be occupied by the first signal, and the second time unit group is the time-domain resource allowed to be occupied by the second signal. The first time interval is greater than or equal to a predefined interval. At least one of the first time unit group, the second time unit group, or the first time interval constitutes a time unit group set. The time unit group set occurs periodically.

In some embodiments, the method further includes: transmitting or receiving time-domain configuration information. The time-domain configuration information is used to configure the time-domain positions of a time unit group set in at least one period.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, a first time unit group and a first time interval constitute a time unit group set.

In some embodiments, the second time unit group and the first time interval constitute a time unit group set.

In some embodiments, in a case where only the first time unit group (or the second time unit group) is configured, the other time in the time unit group set is the first time interval, that is, the first time interval is implicitly configured or indicated.

In some embodiments, the time unit group set is at least one of a frame, a subframe, a slot, a sub-slot, or a symbol group.

In some embodiments, time-domain position of the time unit group set within at least one period is configured in at least one of the following manners:

(1) a bitmap manner; or
(2) a SLIV manner.

Illustratively, in each of the at least one period, there are N slots, wherein N is a positive integer. Each of the N slots is referred to as a time unit group set, or a set of time units. FIG. 9 illustrates a schematic diagram of the configuration of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For example, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The embodiments of the present disclosure do not impose any limitations on this. M is a positive integer and is less than or equal to N.

In the case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and there are four first slots, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the remaining time-domain resources being time-domain resources occupied by the second type of first slot.

Alternatively, the sum of at least two types of first slots can be configured using any of the aforementioned configuration manners, and then the time-domain resources occupied by the second type of first slot can be configured using any of the configuration manners. The remaining time-domain resources are time-domain resources occupied by the first type of first slot.

By configuring the time-domain positions of a time unit group set in at least one period using a bitmap manner, the configuration of the time unit group set can be made more flexible. By configuring the time-domain positions of a time unit group set in at least one period using the SLIV manner, the configuration is more concise and easier to manage, suitable for simpler configuration requirements.

In the aforementioned embodiment, the first slot is used as an example for illustration. However, other time-domain resources such as the first sub-slot or the first symbol group can also be used, and this is not limited in the embodiments of the present disclosure.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or

individual in space or on a map. Localization involves using data measured by sensors, such as GPS data or LiDAR data, to calculate the position of the object.

Range measurement refers to measuring the distance between an object and a reference point using sensors or technology. Common range measurement methods include using GPS, laser range measurement, ultrasonic waves, and the like.

Angle measurement refers to measuring a direction or angle of an object using sensors or technology. Typically, digital compasses, gyroscopes, angle sensors, and other devices are employed for angle measurement.

Speed measurement refers to measuring the moving speed of an object using sensors or technology. Speed measurement can be achieved through various methods, such as using radar speedometers, GPS speed measurement, photoelectric sensors, and the like.

Target imaging refers to capturing images or data of a target using sensors such as cameras, radar, or the like. Target imaging technology can provide visual information about the target, such as infrared imaging using thermal cameras.

Target detection refers to automatically detecting target objects in the environment through the analysis of sensor data. Target detection is typically implemented by identifying the location, shape, size, and other characteristics of objects using computer vision and pattern recognition techniques.

Target tracking refers to tracking the position and motion of an object across continuous time and space. Target tracking utilizes sensor data and motion models to predict and estimate the trajectory of the object.

Target identification refers to the process of recognizing and classifying detected targets. Target identification often employs computer vision and pattern recognition techniques to match the characteristics of the target with predefined patterns or databases, thereby determining the identity of the target.

In some embodiments, some or all of the symbols in the first slot are used to carry a sensing signal or a sensing channel, and/or all of the symbols in the second slot are used to carry a communication signal or a communication channel.

In some embodiments, in the first slot, symbols used to carry a sensing signal or a sensing channel and/or symbols corresponding to the guard interval are specified by a communication protocol or configured by a network device, and other symbols in the first slot are used to carry a communication signal or a communication channel; or

in the first slot, the symbols used to carry a communication signal or a communication channel and/or the symbols corresponding to the guard interval are specified by a communication protocol or configured by a network device, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all of the symbols in the first sub-slot are used to carry a sensing signal or a sensing channel, and/or all of the symbols in the second sub-slot are used to carry a communication signal or a communication channel.

In some embodiments, in the first sub-slot, symbols used to carry a sensing signal or a sensing channel and/or symbols corresponding to a guard interval are specified by the communication protocol or configured by the network device, and other symbols in the first sub-slot are used to carry a communication signal or a communication channel; or in the first sub-slot, symbols used to carry a communication signal or a communication channel and/or symbols corresponding to the guard interval are specified by a communication protocol or configured by a network device, and other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. Symbols are represented by white squares, and squares filled with diagonal lines represent CPs. In this configuration, the sub-slot length is half of the slot length, that is, the first sub-slot adopting ECP includes 6 symbols, and the second sub-slot adopting NCP includes 7 symbols. At least one of the following configurations is performed by a network device:

(1) The four symbols preceding the end time of the first sub-slot are symbols used to carry a sensing signal or a sensing channel, and/or symbols corresponding to the guard interval; alternatively, the four symbols preceding the end time of the first sub-slot are symbols corresponding to the guard interval.
(2) The two symbols from the start time of the first sub-slot are used to carry a communication signal or a communication channel; or the two symbols from the start time of the first sub-slot are symbols not used to carry a sensing signal or a sensing channel.
(3) Starting from the third symbol of the first sub-slot, three consecutive symbols are symbols used to carry a sensing signal or a sensing channel, and the last symbol is the symbol corresponding to the guard interval. Alternatively, two symbols starting from the start time of the first sub-slot are symbols used to carry a communication signal or a communication channel, and the last symbol is the symbol corresponding to the guard interval.

In summary, the method according to the embodiments involves transmitting or receiving a first signal and/or a second signal. The time interval between the first signal and the second signal includes a predefined interval. The presence of a predefined interval between the first signal and the second signal can reduce transmission interference between the two signals.
The method according to the embodiments also involves determining the time-domain positions of the time unit groups and the first time interval respectively corresponding to different signals by using symbol numbers. Compared to using absolute time to determine the time-domain positions of the time unit groups and the first time interval respectively corresponding to different signals, this method reduces computational complexity.
The method according to this embodiment also increases the coverage distance of the sensing signal, i.e., the second signal, by adopting ECP.
FIG. 12 illustrates a flowchart of a method for transmitting configuration information according to an exemplary embodiment of the present disclosure. The method is performed by a communication device. The method includes:
**Step 1210:** transmitting or receiving time-domain configuration information.
The time-domain configuration information is used to configure at least one of the first time unit group, the second time unit group, or the first time interval. The first time unit group is the time-domain resource allowed to be occupied by the first signal, and the second time unit group is the time-domain resource allowed to be occupied by the second signal.
In some embodiments, the first time unit group can also be interpreted as any of the following meanings: a set of first time units, a series of first time units, a plurality of first time units, a plurality of consecutive first time units, or the like. For example, it can refer to the N first time units ranked at the top, or the N first time units ranked at the bottom, wherein N is a positive integer.
In some embodiments, the first time interval includes flexible time, measurement interval, guard interval, or the like, and the predefined interval is the full set or a subset of the first time interval.
In some embodiments, the communication device acquires configuration information for a first time unit group and a second time unit group, and indirectly acquires relevant information for a first time interval.
In some embodiments, the communication device acquires configuration information for either the first time unit group or the second time unit group, and the other time is collectively referred to as the first time interval.
In some embodiments, the first time unit group and the second time unit group are used to carry different signals or channels.
In some embodiments, the first time unit group is used to carry a communication signal or a communication channel, and the second time unit group is used to carry a sensing signal or a sensing channel; or the first time unit group is used to carry a communication signal or a communication channel, and the second time unit group is not used to carry a communication signal or a communication channel; or the second time unit group is used to carry a sensing signal or a sensing channel, and the first time unit group is not used to carry a sensing signal or a sensing channel; or the first time unit group is used to carry a communication signal or a communication channel, and the second time unit group is used to carry a sensing signal or a sensing channel and/or a communication signal or a communication channel; or the first time unit group is used to carry a communication signal or a communication channel, and the second time unit group is used to carry a sensing signal or a sensing channel and a communication signal or a communication channel, with the priority of a communication signal or a communication channel being lower than that of a sensing signal or a sensing channel in the second time unit group.
In some embodiments, the communication signal or communication channel includes, but is not limited to:

downlink signal or downlink channel: at least one of PDSCH, SSB, DMRS, CSI-RS, PT-RS, TRS, or PRS; and
uplink signal or uplink channel: at least one of PUSCH, SRS, or PUCCH.

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), and CPRS.

In some embodiments, the duration of the first time interval is greater than or equal to the duration of the predefined interval.

In some embodiments, the first time unit group and the second time unit group satisfy at least one of the following constraint conditions: the end time of the second time unit group is not later than a time point that is earlier than the start time of the first time unit group by the predefined interval; the start time of the first time unit group is not earlier than a time point that is later than the end time of the second time unit group by the predefined interval; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first time unit group and the second time unit group satisfy at least one of the following constraint conditions: the end time of the second time unit group is not later than the start time of the predefined interval, and the end time of the predefined interval is not later than the start time of the first time unit group; the start time of the first time unit group is not earlier than the end time of the predefined interval, and the start time of the predefined interval is not earlier than the end time of the second time unit group; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

The aforementioned constraint conditions, by imposing restrictions on the first and second time unit groups, can reduce transmission interference between signals carried within different time unit groups.

In some embodiments, the time-domain configuration information is used to configure a first time unit group, a second time unit group, and a first time interval.

Taking the example where the first time unit group is used to carry a communication signal and the second time unit group is used to carry a sensing signal, for a communication device that supports both communication and sensing, according to the time-domain configuration information, the communication signal is transmitted or received in the first time unit group, and the sensing signal is transmitted or received in the second time unit group. The first time interval follows the second time unit group.

In some embodiments, the time-domain configuration information is used to configure a first time unit group, a second time unit group, and a first time interval, with the first time interval existing between the first time unit group and the second time unit group.

Taking the example of using the first time unit group to carry a communication signal and the second time unit group to carry a sensing signal, for a communication device that supports both communication and sensing, according to the time-domain configuration information, the communication signal is transmitted or received in the first time unit group, and the sensing signal is transmitted or received in the second time unit group. There is a first time interval between the first time unit group and the second time unit group.

In some embodiments, the time-domain configuration information is used to configure the first time unit group and the first time interval.

In some embodiments, the time-domain configuration information is used to configure the second time unit group and the first time interval.

Taking the first time unit group used to carry a communication signal as an example, for a communication device that only supports communication and does not support sensing, the time unit corresponding to the second time unit group is not used, or the time unit corresponding to the second time unit group is not used to carry a communication signal or a communication channel. The communication device transmits or receives the communication signal in the first time unit group according to the time-domain configuration information. The first time interval follows the first time unit group.

In some embodiments, at least one of the first time unit group, the second time unit group, or the first time interval constitutes a time unit group set. The time unit group set occurs periodically.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, a first time unit group and a first time interval constitute a time unit group set.

In some embodiments, the second time unit group and the first time interval constitute a time unit group set.

In some embodiments, in a case where only the first time unit group (or the second time unit group) is configured, the other time in the time unit group set is the first time interval, that is, the first time interval is implicitly configured or indicated.

In some embodiments, the time unit group set is at least one of a frame, a subframe, a slot, a sub-slot, or a symbol group.

In some embodiments, the time-domain configuration information further includes: the time-domain position of the time unit group set in at least one period.

In some embodiments, the time-domain position of the time unit group set within at least one period is configured in at least one of the following manners:

(1) a bitmap manner; or
(2) a SLIV manner.

Illustratively, in each of at least one period, there are N slots, wherein N is a positive integer. Each of the N slots is referred to as a time unit group set, or a set of time units. FIG. 9 illustrates a schematic diagram of the configuration of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For instance, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The embodiments of the present disclosure do not impose any limitations on this. M is a positive integer and is less than or equal to N.

In the case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and the number of first slots is four, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the remaining time-domain resources being the time-domain resources occupied by the second type of first slot.

Alternatively, the sum of at least two types of first slots can be configured using any of the aforementioned configuration manners, and then the time-domain resources occupied by the second type of first slot can be configured using any of the configuration manners. The remaining time-domain resources are the time-domain resources occupied by the first type of first slot.

By configuring the time-domain positions of a time unit group set in at least one period using a bitmap manner, the configuration of the time unit group set can be made more flexible. By configuring the time-domain positions of a time unit group set in at least one period using the SLIV manner, the configuration is more concise and easier to manage, suitable for simpler configuration requirements.

In the aforementioned embodiment, the first slot is used as an example for illustration. However, other time-domain resources such as the first sub-slot or the first symbol group can also be used, and this is not limited in the embodiments of the present disclosure.

In some embodiments, the duration of the predefined interval is less than or equal to the duration of the first time interval, and the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group, a subcarrier spacing corresponding to the second time unit group, a frequency range corresponding to the first time unit group, or a frequency range corresponding to the second time unit group.

Different configurations can correspond to different services. For instance, some configurations are used for

wireless communication, and others are used for sensing services, which can be referred to as sensing configurations, including sensing services such as different sensing coverage requirements, different sensor configurations, and different sensing algorithms.

When the bandwidths corresponding to the first and second time unit groups are different, additional time is required to adjust the receiving range of the receiver in the communication device.

The Frequency Range (FR) corresponding to the first time unit group and/or the second time unit group includes FR1 or FR2. FR1 is also known as the Sub-6 GHz frequency range, representing the low-frequency range, covering the frequency range from 450 MHz to 6 GHz. FR2 is also known as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, the time unit types respectively corresponding to the first time unit group and the second time unit group are different.

In some embodiments, the time unit type includes a first type adopting NCP and a second type adopting ECP.

Based on the first time unit group being used to carry a communication signal or a communication channel, and the second time unit group being used to carry a sensing signal or a sensing channel, the different time unit types corresponding to the first and second time unit groups can meet the different service requirements of communication services and sensing services, thereby better supporting communication services or sensing services.

Illustratively, the first time unit group includes at least one symbol, and the second time unit group includes at least one symbol. The symbol length of the symbol (first symbol type) corresponding to the first time unit group is the same as or different from the symbol length of the symbol (second symbol type) corresponding to the second time unit group. The symbol length includes the cyclic prefix. For example, both the first symbol type and the second symbol type adopt NCP or both adopt ECP. Adopting ECP is simpler, but the resource utilization efficiency is lower; alternatively, the first symbol type adopts NCP and the second symbol type adopts ECP. Adopting ECP can increase the sensing coverage distance.

In some embodiments, time unit types respectively corresponding to a part of the first time unit group and another part of the first time unit group are different; and/or

the time unit types respectively corresponding to a part of the second time unit group and another part of the second time unit group are different.

For example, the first time unit group corresponds to the first type, and the second time unit group corresponds to the second type.

For another example, the first time unit group corresponds to the first type, a part of the second time unit group corresponds to the first type, and another part of the second time unit group corresponds to the second type.

For another example, a part of the first time unit group corresponds to the first type, and a part of the second time unit group corresponds to the second type; a part of the second time unit group corresponds to the first type, and another part of the second time unit group corresponds to the second type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different time unit types can better support communication services or sensing services.

In some embodiments, the method further includes: transmitting or receiving first configuration information.

The first configuration information is used to configure the time unit types respectively corresponding to the first time unit group and the second time unit group.

By transmitting or receiving the first configuration information, the first configuration information is used to configure the time unit types respectively corresponding to the first time unit group and the second time unit group, thereby more accurately configuring the time unit types respectively corresponding to different time unit groups.

In some embodiments, the first time unit group represents the time-domain resource that is allowed to be occupied by the first signal, and the second time unit group represents the time-domain resource that is allowed to be occupied by the second signal. Both the first and second time unit groups include at least one time unit. The time unit includes at least one of: frame, subframe, slot, sub-slot, symbol group, or symbol. In the embodiments of the present disclosure, the time unit is exemplified as a symbol for illustration.

In some embodiments, the first time interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to the first time interval.

In the case where the first time interval is a subset of at least one of the aforementioned time periods, the other

time periods within the aforementioned time periods, excluding the first time interval, are used for other functions. For example, the start time period and the end time period are used for other functions, and the intermediate time period is the first time interval.

In some embodiments, the first time interval is at least one of a guard interval, a flexible time, or a measurement interval.

In some embodiments, the first time interval is greater than or equal to a predefined interval, and the predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to a predefined interval.

In the case where the predefined interval is a subset of at least one of the aforementioned time periods, the other time periods within the aforementioned time periods, excluding the predefined interval, are utilized for other functions. For instance, the start time period and the end time period are utilized for other functions, and the intermediate time period serves as the predefined interval.

In some embodiments, the predefined interval is at least one of a cyclic prefix and a guard interval.

In scenarios where the first time interval (or predefined interval) is at least one of the aforementioned time periods, or where the first time interval (or predefined interval) is a subset of at least one of these time periods, configuring the first time interval (or predefined interval) based on different scenarios aligns more closely with practical needs. For instance, configuring the first time interval (or predefined interval) as a measurement interval allows communication devices that only support communication and not sensing to utilize this interval without acquiring sensing-related information.

In some embodiments, transmitting or receiving a signal in a time-domain resource that conforms to the first frame structure.

The first frame structure includes at least one of: a first time unit group, a second time unit group, or a first time interval.

In some embodiments, transmitting or receiving a signal in a time-domain resource having the characteristics of the first frame structure.

The first frame structure includes at least one of: a first time unit group, a second time unit group, or a first time interval.

For specific details of the first frame structure, please refer to the embodiments shown in FIG. 8, which are not elaborated here.

In some embodiments, at least one of time-domain information of the first time unit group; time-domain information of the second time unit group; or time-domain information of the first time interval is specified by the communication protocol or configured by the network device. The first time interval includes a predefined interval.

In some embodiments, the time-domain information of the first time unit group, the second time unit group, or the first time interval includes at least one of: a start time (or a start position), an end time (or an end position), an absolute time length, a number of occupied time units, or a time-domain position of the occupied time units.

Based on the aforementioned information, when indicating the first time unit group, the second time unit group, or the first time interval, bits for indication can be saved. For example, when the first time unit group is at the beginning or end of the first slot, only indicating the absolute time length (or the number of occupied time units) is more economical compared to indicating the end time (or end position), start time (or start position), and absolute time length (or the number of occupied time units). The number of occupied time units can be the number of occupied slots, or the number of occupied symbols, or both the number of occupied slots and the number of symbols. For instance, N slots are occupied, and the first M symbols of the slot following the Nth slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; the first time interval is from the end time of the second time unit group to the end time of the first frame structure.

Taking the first frame structure as the slot structure, where the first time unit group includes at least one symbol,

the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and the first time unit group corresponds to the first symbol type; the second time unit group starts after the end of the symbols of the last first time unit group and occupies Y symbols, and the second time unit group corresponds to the second symbol type; the guard interval is from the end of the symbols of the last second time unit group to the end time of the first slot; X and Y are positive integers, and the sum of X and Y is less than or equal to 14 (NCP) or 12 (ECP).

Taking the example where the subcarrier spacing is 15kHz, the time unit is a symbol, the second symbol type adopts ECP, and the first symbol type adopts NCP, the configuration is as shown in Table 2, which is not elaborated further here.

The calculation rules for the first symbol type time, the second symbol type time, and the guard interval time are as follows:

$$\text{First symbol type time} = \begin{cases} 2192*64*X+16*64 & X<7 \\ 2192*64*X+32*64 & X\geq 7 \end{cases};$$

$$\text{Second symbol type time} = 2560*64*Y;$$

$$\text{Guard interval time} = 30720*64 - \text{the first symbol type time} - \text{the second symbol type time}.$$

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the second time unit group occupies Y time units from the start time of the first frame structure; the first time unit group occupies X time units forward from the end time of the first frame structure; and the first time interval exists between the second time unit group and the first time unit group.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the second time unit group occupies Y symbols from the start time of the first slot, and the second time unit group corresponds to the second symbol type; the first time unit group occupies X symbols counting backwards from the end time of the first slot, and corresponds to the first symbol type; there is a guard interval between the second time unit group and the first time unit group; X and Y are positive integers, and the sum of X and Y is less than or equal to 14 (NCP) or 12 (ECP).

Taking the example of a subcarrier spacing of 15kHz, with the time unit being a symbol, where the second symbol type adopts ECP and the first symbol type adopts NCP, the configuration is as shown in Table 3, and is not further elaborated here.

The calculation rules for the first symbol type time, the second symbol type time, and the guard interval time are as follows:

$$\text{First symbol type time} = \begin{cases} 2192*64*X & X\leq 7 \\ 2192*64*X+16*64 & X>7 \end{cases};$$

$$\text{Second symbol type time} = 2560*64*Y;$$

Guard interval time = 30720 * 64 - the first symbol type time - the second symbol type time.

In some embodiments, X and Y are positive integers, and the sum of X and Y is less than or equal to 14. $T_c$ represents the basic time unit of the NR system.

In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.

In some embodiments, the subcarrier spacings respectively corresponding to the first time unit group and the second time unit group are different.

Subcarrier spacing refers to the frequency spacing between adjacent subcarriers in an OFDM system. In an OFDM system, data is allocated to a plurality of parallel subcarriers for transmission, with each subcarrier corresponding to an independent frequency.

Illustratively, the first time unit group corresponds to subcarrier spacing 1, the second time unit group corresponds to subcarrier spacing 2, with subcarrier spacing 1=15 kHz and subcarrier spacing 2=30 kHz.

According to different communication requirements or different sensing requirements, different subcarrier spacings are set to better support communication services or sensing services.

In some embodiments, subcarrier spacings respectively corresponding to a part of the first time unit group and another part of the first time unit group are different; and/or

subcarrier spacings respectively corresponding to a part of the second time unit group and another part of the second time unit group are different.

For example, the first time unit group corresponds to the first subcarrier spacing type, and the second time unit group corresponds to the second subcarrier spacing type.

For another example, the first time unit group corresponds to the first subcarrier spacing type, a part of the second time unit group corresponds to the first subcarrier spacing type, and another part of the second time unit group corresponds to the second subcarrier spacing type.

For another example, a part of the first time unit group corresponds to the first subcarrier spacing type, and a part of the second time unit group corresponds to the second subcarrier spacing type; a part of the second time unit group corresponds to the first subcarrier spacing type, and another part of the second time unit group corresponds to the second subcarrier spacing type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different types of subcarrier spacing can better support communication services or sensing services.

Taking the first frame structure as the slot structure, the first time unit group includes at least one symbol, and the second time unit group includes at least one symbol. The first time interval is the guard interval, the subcarrier spacing corresponding to the first time unit group is 15kHz, and the subcarrier spacing corresponding to the second time unit group is 30kHz. The time unit is the symbol, and both the first symbol type and the second symbol type adopt ECP as an example, the configuration is as shown in Table 4, which is not elaborated here. The guard interval time = total length of the slot - number of symbols of the first symbol type - number of symbols of the second symbol type. Table 4 is calculated based on the example where the sum of X and Y is 12. The sum of X and Y may also be 13, 11, or the like, which is not limited in the embodiments of the present disclosure.

In some embodiments, the method further includes: transmitting or receiving second configuration information.

The second configuration information is used to configure the subcarrier spacings respectively corresponding to the first time unit group and the second time unit group.

By transmitting or receiving the second configuration information, the second configuration information is used to configure the subcarrier spacings respectively corresponding to the first time unit group and the second time unit group, thereby more accurately configuring the subcarrier spacings respectively corresponding to different time unit groups.

In some embodiments, the duration of the predefined interval is less than or equal to the duration of the first time interval, and the predefined interval is specified by the communication protocol; alternatively, the predefined interval is

configured by the network device.

In some embodiments, the predefined interval is determined from a plurality of candidate intervals specified by the communication protocol or configured by the network device.

The network device configures the predefined interval through high-level signaling or physical layer signaling. The high-level refers to the protocol layers above the physical layer.

In a case where specified by the communication protocol, no network device configuration is required, thereby saving signaling; and in a case where configured by the network device, diverse configuration manners are supported, allowing for configuration according to actual needs.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or individual in space or on a map. Localization involves using data measured by sensors, such as GPS data or LiDAR data, to calculate the position of the object.

Range measurement refers to measuring the distance between an object and a reference point using sensors or technology. Common range measurement methods include using GPS, laser range measurement, ultrasonic waves, or the like.

Angle measurement refers to measuring the direction or angle of an object using sensors or technology. Digital compasses, gyroscopes, angle sensors, and the like are commonly used for angle measurement.

Speed measurement refers to measuring the moving speed of an object using sensors or technology. Speed measurement can be achieved through various methods, such as using radar speedometers, GPS speed measurement, photoelectric sensors, or the like.

Target imaging refers to the process of capturing images or data of a target using sensors such as cameras, radar, or the like. Target imaging technology can provide visual information about the target, such as infrared imaging using thermal cameras.

Target detection refers to automatically detecting target objects in the environment through the analysis of sensor data. Target detection is typically implemented by identifying the location, shape, size, and other characteristics of objects using computer vision and pattern recognition techniques.

Target tracking refers to tracking the position and motion of an object across continuous time and space. Target tracking utilizes sensor data and motion models to predict and estimate the trajectory of the object.

Target identification refers to the process of recognizing and classifying detected targets. Target Identification often employs computer vision and pattern recognition techniques to match the characteristics of the targets with predefined patterns or databases, thereby determining the identity of the targets.

In some embodiments, some or all symbols in the first slot are used to carry a sensing signal or a sensing channel, and/or all symbols in the second slot are used to carry a communication signal or a communication channel.

In some embodiments, in the first slot, symbols used to carry a sensing signal or a sensing channel and/or symbols corresponding to the guard interval are specified by the communication protocol or configured by the network device, and other symbols in the first slot are used to carry a communication signal or a communication channel; or in the first slot, symbols used to carry a communication signal or a communication channel and/or symbols corresponding to the guard interval are specified by the communication protocol or configured by the network device, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all of the symbols in the first sub-slot are used to carry a sensing signal or a sensing channel, and/or all of the symbols in the second sub-slot are used to carry a communication signal or a communication channel.

In some embodiments, in the first sub-slot, symbols used to carry a sensing signal or a sensing channel and/or symbols corresponding to the guard interval are specified by the communication protocol or configured by the network device, and other symbols in the first sub-slot are used to carry a communication signal or a communication channel; or in the first sub-slot, symbols used to carry a communication signal or a communication channel and/or symbols corresponding to the guard interval are specified by the communication protocol or configured by the network device, and other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier

spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. Symbols are represented by white squares, and squares filled with diagonal lines represent Cyclic Prefixes (CPs). In this configuration, the sub-slot length is half of the slot length, that is, the first sub-slot adopting ECP includes 6 symbols, and the second sub-slot adopting NCP includes 7 symbols. At least one of the following configurations is performed by a network device:

(1) The four symbols preceding the end time of the first sub-slot are symbols used to carry a sensing signal or a sensing channel, and/or symbols corresponding to the guard interval; alternatively, the four symbols preceding the end time of the first sub-slot are symbols corresponding to the guard interval.

(2) The two symbols from the start time of the first sub-slot are used to carry a communication signal or a communication channel; or the two symbols from the start time of the first sub-slot are symbols not used to carry a sensing signal or a sensing channel.

(3) Starting from the third symbol of the first sub-slot, three consecutive symbols are symbols used to carry a sensing signal or a sensing channel, and the last symbol is the symbol corresponding to the guard interval. Alternatively, two symbols starting from the start time of the first sub-slot are symbols used to carry a communication signal or a communication channel, and the last symbol is the symbol corresponding to the guard interval.

In summary, the method according to the embodiments involves transmitting or receiving time-domain configuration information. The time-domain configuration information is used to configure at least one of: a first time unit group, a second time unit group, or a first time interval. The first time unit group is the time-domain resource that is allowed to be occupied by the first signal, and the second time unit group is the time-domain resource that is allowed to be occupied by the second signal. Based on the time-domain configuration information, the first time interval is configured between the first and second time unit groups, which can reduce transmission interference between signals carried within different time unit groups.

The method according to the embodiments also determines the time-domain positions of different time unit groups and the first time interval by using symbol numbers, which reduces the computational complexity compared to determining the time-domain positions of different time unit groups and the first time interval using absolute time.

The method according to the embodiments also increases the coverage distance of the sensing signal by adopting ECP. The second time unit group is a time unit group used to carry a sensing signal or a sensing channel.

The method according to the embodiments further involves transmitting or receiving first configuration information, which is used to configure the time unit types respectively corresponding to the first time unit group and the second time unit group, thereby more accurately configuring the time unit types respectively corresponding to different time unit groups.

The method according to the embodiments also involves transmitting or receiving second configuration information, which is used to configure the subcarrier spacings respectively corresponding to the first time unit group and the second time unit group, thereby more accurately configuring the subcarrier spacings respectively corresponding to different time unit groups.

In the aforementioned embodiments, the embodiments corresponding to FIG. 7, the embodiments corresponding to FIG. 11, and the embodiments corresponding to FIG. 12 can be implemented individually or in combination, and the present disclosure does not impose any restrictions on this.

FIG. 13 illustrates a block diagram of an apparatus for signal transmission according to an exemplary embodiment of the present disclosure. This apparatus can be implemented as a communication device or as a part of a communication device through software, hardware, or a combination of both. The apparatus includes at least one of a transceiver module 1310 or a processing module 1320.

The transceiver module 1310 is configured to transmit or receive a signal in a time-domain resource that conforms to a first frame structure.

The first frame structure includes at least one of a first time unit group, a second time unit group, or a predefined interval.

When the transceiver module 1310 is configured to transmit a signal, the transceiver module 1310 includes a transmitting module; when the transceiver module 1310 is configured to receive a signal, the transceiver module 1310 includes a receiving module. In some embodiments, the transceiver module 1310 only includes a transmitting module; and in some embodiments, the transceiver module 1310 only includes a receiving module. In the embodiments, the transceiver module 1310 is exemplified by including both a transmitting module and a receiving module.

In some embodiments, the transceiver module 1310 is configured to transmit or receive a signal in a time-domain resource having the characteristics of a first frame structure;

The first frame structure includes at least one of: a first time unit group, a second time unit group, or a first time interval.

In some embodiments, the first time unit group can also be understood as any of the meanings of a set of first time units, a series of first time units, a plurality of first time units, a plurality of consecutive first time units, or the like, such as the N first time units ranked at the top position, or the N first time units ranked at the bottom position, wherein N is a positive integer.

In some embodiments, the first time interval includes flexible time, measurement interval, guard interval, or the like, and the predefined interval is the full set or a subset of the first time interval.

In some embodiments, the apparatus for signal transmission acquires configuration information for a first time unit group and a second time unit group, thereby indirectly obtaining relevant information about a first time interval.

In some embodiments, the apparatus for signal transmission acquires configuration information for either the first time unit group or the second time unit group, and the other time is collectively referred to as the first time interval.

In some embodiments, the first time unit group and the second time unit group are used to carry different signals or channels.

In some embodiments, the first time unit group is used to carry a communication signal or a communication channel, and the second time unit group is used to carry a sensing signal or a sensing channel; or

the first time unit group is used to carry a communication signal or a communication channel, and the second time unit group is not used to carry a communication signal or a communication channel; or

the second time unit group is used to carry a sensing signal or a sensing channel, and the first time unit group is not used to carry a sensing signal or a sensing channel; or

the first time unit group is used to carry a communication signal or a communication channel, and the second time unit group is used to carry a sensing signal or a sensing channel and/or a communication signal or a communication channel; or

the first time unit group is used to carry a communication signal or a communication channel, and the second time unit group is used to carry both a sensing signal or a sensing channel and a communication signal or a communication channel. In the second time unit group, the priority of a communication signal or a communication channel is lower than that of a sensing signal or a sensing channel.

In some embodiments, the communication signal or communication channel includes, but is not limited to:

downlink signal or downlink channel: at least one of PDSCH, SSB, DMRS, CSI-RS, PT-RS, TRS, or PRS; and

uplink signal or uplink channel: at least one of PUSCH, SRS, or PUCCH.

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), and CPRS.

In some embodiments, the duration of the first time interval is greater than or equal to the duration of the predefined interval.

In some embodiments, the first time unit group and the second time unit group satisfy at least one of the following constraint conditions: the end time of the second time unit group is not later than a time point that is earlier than the start time of the first time unit group by the predefined interval; the start time of the first time unit group is not earlier than a time point that is later than the end time of the second time unit group by the predefined interval; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first time unit group and the second time unit group satisfy at least one of the following constraint conditions: the end time of the second time unit group is not later than the start time of the predefined interval, and the end time of the predefined interval is not later than the start time of the first time unit group; the start time of the first time unit group is not earlier than the end time of the predefined interval, and the start time of the predefined interval is not earlier than the end time of the second time unit group; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

The aforementioned constraint conditions, by imposing restrictions on the first and second time unit groups, can reduce transmission interference between signals carried within different time unit groups.

In some embodiments, the first frame structure includes a first time unit group, a second time unit group, and a first time interval.

Taking the example of using the first time unit group to carry a communication signal and the second time unit group to carry a sensing signal, for an apparatus for signal transmission that supports both communication and sensing, the first frame structure shown in FIG. 8(a) is predefined by a communication protocol or configured by a network apparatus. The communication signal is transmitted or received in the first time unit group, and the sensing signal is transmitted or received in the second time unit group. The first time interval follows the second time unit group.

In some embodiments, the first frame structure includes a first time unit group and a second time unit group, with a first time interval between the first time unit group and the second time unit group.

Taking the example of using the first time unit group to carry a communication signal and the second time unit group to carry a sensing signal, for an apparatus for signal transmission that supports both communication and sensing, the first frame structure shown in FIG. 8(b) is predefined by a communication protocol or configured by a network apparatus. The communication signal is transmitted or received in the first time unit group, and the sensing signal is transmitted or received in the second time unit group. There is a first time interval between the first time unit group and the second time unit group.

In some embodiments, the first frame structure includes a first time unit group and a first time interval.

In some embodiments, the first frame structure includes: a second time unit group and a first time interval.

Taking the first time unit group used to carry a communication signal as an example, for an apparatus for signal transmission that only supports communication and does not support sensing, the first frame structure shown in FIG. 8(c) is predefined by a communication protocol or configured by a network apparatus. The time unit corresponding to the second time unit group is not used, or the time unit corresponding to the second time unit group is not used to carry a communication signal or a communication channel. The apparatus for signal transmission transmits or receives the communication signal in the first time unit group. The first time interval follows the first time unit group.

In some embodiments, the duration of the predefined interval is less than or equal to the duration of the first time interval, and the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group; subcarrier spacing corresponding to the second time unit group, a frequency range corresponding to the first time unit group, or a frequency range corresponding to the second time unit group.

Different configurations can correspond to different services. For instance, some configurations are used for wireless communication, and some configurations are used for sensing services, which can be referred to as sensing configurations, including sensing services such as different sensing coverage requirements, different sensor configurations, and different sensing algorithms.

When the bandwidths corresponding to the first and second time unit groups are different, additional time is required to adjust the receiving range of the receiver in the apparatus for signal transmission.

The frequency range corresponding to the first time unit group and/or the second time unit group includes FR1 or FR2. FR1 is also known as the Sub-6 GHz frequency range, representing the low-frequency range, covering the frequency range from 450 MHz to 6 GHz. FR2 is also known as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, time unit types respectively corresponding to the first time unit group and the second time unit group are different.

In some embodiments, the time unit type includes a first type adopting NCP and a second type adopting ECP.

Based on the use of the first time unit group for carrying a communication signal or a communication channel, and the second time unit group for carrying a sensing signal or a sensing channel, the different time unit types corresponding to the first and second time unit groups can meet the different business requirements of communication services and sensing services, thereby better supporting communication services or sensing services.

Illustratively, the first time unit group includes at least one symbol, and the second time unit group includes at least one symbol. The symbol length of the symbol corresponding to the first time unit group (first symbol type) and the symbol corresponding to the second time unit group (second symbol type) may be the same or different, and the symbol length includes a cyclic prefix. For example, both the first symbol type and the second symbol type adopt NCP or both adopt ECP. Adopting ECP is simpler, but the resource utilization efficiency is lower; alternatively, the first symbol type adopts NCP, and the second symbol type adopts ECP. Adopting ECP can increase the sensing coverage distance.

In some embodiments, time unit types respectively corresponding to a part of the first time unit group and another

part of the first time unit group are different; and/or time unit types respectively corresponding to a part of the second time unit group and another part of the second time unit group are different.

For example, the first time unit group corresponds to the first type, and the second time unit group corresponds to the second type.

For another example, the first time unit group corresponds to the first type, a part of the second time unit group corresponds to the first type, and another part of the second time unit group corresponds to the second type.

For another example, a part of the first time unit group corresponds to the first type, and a part of the second time unit group corresponds to the second type; a part of the second time unit group corresponds to the first type, and another part of the second time unit group corresponds to the second type.

Different communication services or different sensing services have different requirements for signals. Therefore, different parts of the first time unit group can be applied to communication services with different requirements, and/or different parts of the second time unit group can be applied to sensing services with different requirements. Respectively corresponding to different time unit types can better support communication services or sensing services.

In some embodiments, each of the first time unit group and the second time unit group comprises at least one time unit. The time unit includes at least one of frame, subframe, slot, sub-slot, symbol group, or symbol. In the embodiments of the present disclosure, the time unit is exemplified as a symbol for illustration.

In some embodiments, the first time interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to the first time interval.

In the case where the first time interval is a subset of at least one of the aforementioned time periods, the other time periods within the aforementioned time periods, excluding the first time interval, are used for other functions. For example, the start time period and the end time period are used for other functions, and the intermediate time period is the first time interval.

In some embodiments, the first time interval is at least one of a guard interval, a flexible time, or a measurement interval.

In some embodiments, the first time interval is greater than or equal to a predefined interval. The predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to the predefined interval.

In the case where the predefined interval is a subset of at least one of the aforementioned time periods, the other time periods within the aforementioned time periods, excluding the predefined interval, are used for other functions. For example, the start time period and the end time period are used for other functions, and the intermediate time period is the predefined interval.

In some embodiments, the predefined interval is at least one of a cyclic prefix or a guard interval.

In a case where the first time interval (or predefined interval) is at least one of the aforementioned time periods, or where the first time interval (or predefined interval) is a subset of at least one of the aforementioned time periods, configuring the first time interval (or predefined interval) according to different scenarios is more in line with actual needs. For example, configuring the first time interval (or predefined interval) as a measurement interval allows an apparatus for signal transmission that only supports communication and does not support sensing to use the first time interval (or predefined interval), without the need to acquire information related to sensing.

**First frame structure:**

FIG. 8(a) illustrates a schematic diagram of the first frame structure according to an exemplary embodiment of the present disclosure. The first frame structure 1 is specified by a communication protocol or configured by a network apparatus. In the first frame structure 1, the first time unit group precedes the second time unit group, and the first time interval follows the second time unit group.

Taking the first frame structure as the slot structure, where the first time unit group includes at least one symbol, the second time unit group includes at least one symbol, and the first time interval is a guard interval as an example, in slot structure 1, the symbol (first symbol type) corresponding to the first time unit group comes first, the symbol (second symbol

type) corresponding to the second time unit group comes after the first symbol type, and the guard interval comes after the second symbol type.

FIG. 8(b) illustrates a schematic diagram of the first frame structure according to an exemplary embodiment of the present disclosure. The first frame structure 2 is specified by a communication protocol or configured by a network apparatus. In the first frame structure 2, the second time unit group precedes the first time unit group, with a first time interval between the second time unit group and the first time unit group.

Taking the first frame structure as a slot structure, where the first time unit group includes at least one symbol and the second time unit group includes at least one symbol, and the first time interval is a guard interval as an example, in slot structure 2, the symbol (second symbol type) corresponding to the second time unit group comes first, followed by the symbol (first symbol type) corresponding to the first time unit group, with the guard interval between the second symbol type and the first symbol type.

In some embodiments, at least one of time-domain information of the first time unit group, time-domain information of the second time unit group, or time-domain information of the first time interval is specified by a communication protocol or configured by a network apparatus, wherein the first time interval is greater than or equal to a predefined interval.

In some embodiments, the time-domain information of the first time unit group, the second time unit group, or the first time interval includes at least one of: a start time (or a start position); an end time (or an end position); an absolute time length; the number of occupied time units; or a time-domain position of the occupied time units.

Based on the above information, when indicating the first time unit group, the second time unit group, or the first time interval, bits for indication can be saved. For example, when the first time unit group is at the beginning or end of the first slot, only the absolute time length (or the number of occupied time units) is indicated, which is more economical compared to indicating the end time (or end position), start time (or start position), and absolute time length (or the number of occupied time units). The number of occupied time units can be the number of occupied slots, or the number of occupied symbols, or both the number of occupied slots and the number of occupied symbols. For example, N slots are occupied, and the first M symbols of the slot following the $N^{th}$ slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; and the time interval from the end time of the second time unit group to the end time of the first frame structure is the first time interval.

Taking the first frame structure as the slot structure, where the first time unit group includes at least one symbol, the second time unit group includes at least one symbol, and the first time interval is the guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and corresponds to the first symbol type; the second time unit group starts after the end of the symbols of the last first time unit group and occupies Y symbols, and corresponds to the second symbol type; from the end of the symbols of the last second time unit group to the end time of the first slot is the guard interval; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 2, which is not elaborated further here. The calculation rules for the first symbol type time, the second symbol type time, and the guard interval time are as follows:

$$\text{First symbol type time} = \begin{cases} 2192*64*X+16*64 & X<7 \\ 2192*64*X+32*64 & X\geq 7 \end{cases};$$

$$\text{Second symbol type time} = 2560*64*Y;$$

Guard interval time = 30720 * 64 - the first symbol type time - the second symbol type time.

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.
From the perspective of the number of occupied time units, the second time unit group occupies Y time units from the start time of the first frame structure; the first time unit group occupies X time units forward from the end time of the first frame structure; and there is a first time interval between the second time unit group and the first time unit group.
Taking the first frame structure as the slot structure, where the first time unit group includes at least one symbol and the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.
From the perspective of the number of occupied time units, the second time unit group occupies Y symbols from the start time of the first slot, and corresponds to the second symbol type; the first time unit group occupies X symbols counting backwards from the end time of the first slot, and corresponds to the first symbol type; a guard interval exists between the second time unit group and the first time unit group; X and Y are positive integers, and the sum of X and Y is less than or equal to 14 (NCP) or 12 (ECP).
Taking the example where the subcarrier spacing is 15kHz, the time unit is a symbol, the second symbol type adopts ECP, and the first symbol type adopts NCP, the configuration is as shown in Table 3, which will not be elaborated here. The calculation rules for the first symbol type time, the second symbol type time, and the guard interval are as follows:

$$\text{First Symbol Type Time} = \begin{cases} 2192*64*X & X \le 7 \\ 2192*64*X+16*64 & X>7 \end{cases};$$

$$\text{Second symbol type} = 2560*64*Y;$$

$$\text{Guard interval time} = 30720 * 64 - \text{the first symbol type time} - \text{the second symbol type time}.$$

In some embodiments, X and Y are positive integers, and the sum of X and Y is less than or equal to 14. $T_c$ represents the basic time unit of the NR system.
In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.
In some embodiments, the subcarrier spacings respectively corresponding to the first time unit group and the second time unit group are different.
Subcarrier spacing refers to the frequency spacing between adjacent subcarriers in an OFDM system. In an OFDM system, data is allocated to a plurality of parallel subcarriers for transmission, with each subcarrier corresponding to an independent frequency.
Illustratively, the first time unit group corresponds to subcarrier spacing 1, and the second time unit group corresponds to subcarrier spacing 2, with subcarrier spacing 1=15 kHz and subcarrier spacing 2=30 kHz.
According to different communication requirements or different sensing requirements, different subcarrier spacings are set to better support communication services or sensing services.

In some embodiments, subcarrier spacings respectively corresponding to a part of the first time unit group and another part of the first time unit group are different; and/or

subcarrier spacings respectively corresponding to a part of the second time unit group and another part of the second time unit group are different.

For example, the first time unit group corresponds to the first subcarrier spacing type, and the second time unit group corresponds to the second subcarrier spacing type.

For another example, the first time unit group corresponds to the first subcarrier spacing type, a part of the second time unit group corresponds to the first subcarrier spacing type, and another part of the second time unit group corresponds to the second subcarrier spacing type.

For another example, a part of the first time unit group corresponds to the first subcarrier spacing type, and a part of the second time unit group corresponds to the second subcarrier spacing type; a part of the second time unit group corresponds to the first subcarrier spacing type, and another part of the second time unit group corresponds to the second subcarrier spacing type.

Different communication services or different sensing services have different requirements for signals, and therefore, different parts of the first time unit group can be applied to communication services with different requirements, and/or different parts of the second time unit group can be applied to sensing services with different requirements. Respectively corresponding to different types of subcarrier spacing can better support communication services or sensing services.

Taking the first frame structure as the slot structure, the first time unit group includes at least one symbol, and the second time unit group includes at least one symbol. The first time interval is the guard interval, the subcarrier spacing corresponding to the first time unit group is 15kHz, and the subcarrier spacing corresponding to the second time unit group is 30kHz. The time unit is a symbol, and both the first symbol type and the second symbol type adopt ECP as an example. The configuration is shown in Table 4, which is not elaborated here. The guard interval time = total length of the slot - number of symbols of the first symbol type - number of symbols of the second symbol type. Table 4 is calculated based on the example where the sum of X and Y is 12, and the sum of X and Y may also be 13, 11, or the like, which is not limited in the embodiments of the present disclosure.

In some embodiments, the duration of the predefined interval is less than or equal to the duration of the first time interval, and the predefined interval is specified by the communication protocol; alternatively, the predefined interval is configured by the network device.

In some embodiments, the predefined interval is determined from a plurality of candidate intervals specified by a communication protocol or configured by a network apparatus.

The network apparatus configures the predefined interval through high-level signaling or physical layer signaling. The high-level refers to the protocol layers above the physical layer.

If specified by a communication protocol, no network apparatus configuration is required, signaling can be saved; if configured by a network apparatus, diverse configuration manners can be supported, allowing configuration according to actual needs.

In some embodiments, at least one of the first time unit group, the second time unit group, or the first time interval constitutes a time unit group set. The time unit group set occurs periodically.

In some embodiments, the transceiver module 1310 is further configured to transmit or receive time-domain configuration information. The time-domain configuration information is used to configure the time-domain position of a time unit group set in at least one period.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, a first time unit group and a first time interval constitute a time unit group set.

In some embodiments, the second time unit group and the first time interval constitute a time unit group set.

In some embodiments, in a case where only the first time unit group (or the second time unit group) is configured, the other time in the time unit group set is the first time interval, that is, the first time interval is implicitly configured or indicated.

In some embodiments, the time unit group set is at least one of a frame, a subframe, a slot, a sub-slot, or a symbol group.

In some embodiments, time-domain position of the time unit group set within at least one period is configured in at least one of the following manners:

(1) a bitmap manner; or
(2) a SLIV manner.

Illustratively, in each of at least one period, there are N slots, wherein N is a positive integer. Each of the N slots is referred to as a time unit group set, or a set of time units. FIG. 9 illustrates a schematic diagram of the configuration of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For example, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The embodiments of the present disclosure do not impose any restrictions on this. M is a positive integer and is less than or equal to N.

In a case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and the number of first slots is 4, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the remaining time-domain resources being time-domain resources occupied by the second type of first slot.

Alternatively, the sum of at least two types of first slots can be configured using any of the aforementioned configuration manners, and then the time-domain resources occupied by the second type of first slot can be configured using any of the configuration manners. The remaining time-domain resources are time-domain resources occupied by the first type of first slot.

By configuring the time-domain positions of a time unit group set in at least one period using a bitmap manner, the configuration of the time unit group set can be made more flexible. By configuring the time-domain positions of a time unit group set in at least one period using the SLIV manner, the configuration is more concise and easier to manage, suitable for simpler configuration requirements.

In the aforementioned embodiment, the first slot is used as an example. However, other time-domain resources such as the first sub-slot or the first symbol group can also be used, and this is not limited in the embodiments of the present disclosure.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or individual in space or on a map. Localization involves using data measured by sensors, such as GPS data or LiDAR data, to calculate the position of the object.

Range measurement refers to measuring the distance between an object and a reference point using sensors or technology. Common range measurement methods include using GPS, laser range measurement, ultrasonic waves, and the like.

Angle measurement refers to measuring the direction or angle of an object using sensors or technology. It is commonly achieved using digital compasses, gyroscopes, angle sensors, and other similar devices.

Speed measurement refers to measuring the moving speed of an object using sensors or technology. It can be achieved through various methods, such as using radar speedometers, GPS speed measurement, photoelectric sensors, and the like.

Target imaging refers to the process of capturing images or data of a target using sensors such as cameras, radar, or the like. Target imaging technology can provide visual information about the target, such as infrared imaging using thermal cameras.

Target detection refers to automatically detecting target objects in the environment through the analysis of sensor data. Target detection is typically implemented by identifying the location, shape, size, and other characteristics of objects using computer vision and pattern recognition techniques.

Target tracking refers to tracking position and motion of an object across continuous time and space. Target tracking employs sensor data and motion models to predict and estimate the trajectory of the object.

Target identification refers to the process of recognizing and classifying detected targets. Target identification often employs computer vision and pattern recognition techniques to match the characteristics of the target with predefined patterns or databases, thereby determining the identity of the target.

In some embodiments, the sensing signal or the sensing channel can serve as a reference signal for at least one of: sensing, localization, range measurement, angle measurement, speed measurement, target imaging, target detection, target tracking, and target identification.

In some embodiments, some or all symbols in the first slot are used to carry a sensing signal or a sensing channel, and/or all symbols in the second slot are used to carry a communication signal or a communication channel.

In some embodiments, in the first slot, symbols used to carry a sensing signal or a sensing channel and/or symbols corresponding to the guard interval are specified by a communication protocol or configured by a network apparatus, and other symbols in the first slot are used to carry a communication signal or a communication channel; or in the first slot, symbols used to carry a communication signal or a communication channel and/or symbols corresponding to the guard interval are specified by a communication protocol or configured by a network apparatus, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all symbols in the first sub-slot are used to carry a sensing signal or a sensing channel, and/or all symbols in the second sub-slot are used to carry a communication signal or a communication channel.

In some embodiments, in the first sub-slot, symbols used to carry a sensing signal or a sensing channel and/or symbols corresponding to a guard interval are specified by a communication protocol or configured by a network apparatus, and other symbols in the first sub-slot are used to carry a communication signal or a communication channel; or

in the first sub-slot, the symbols used to carry a communication signal or a communication channel and/or the symbols corresponding to the guard interval are specified by a communication protocol or configured by a network apparatus. Other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. Symbols are represented by white squares, and squares filled with diagonal lines represent Cyclic Prefixes (CPs). In this configuration, the sub-slot length is half of the slot length, that is, the first sub-slot adopting ECP includes 6 symbols, and the second sub-slot adopting NCP includes 7 symbols. At least one of the following configurations is performed by a network apparatus:

(1) The four symbols preceding the end time of the first sub-slot are symbols used to carry a sensing signal or a sensing channel, and/or symbols corresponding to the guard interval; alternatively, the four symbols preceding the end of the first sub-slot are symbols corresponding to the guard interval.

(2) The two symbols from the start time of the first sub-slot are used to carry a communication signal or a communication channel; or the two symbols from the start time of the first sub-slot are symbols not used to carry a sensing signal or a sensing channel.

(3) Starting from the third symbol of the first sub-slot, three consecutive symbols are symbols used to carry a sensing signal or a sensing channel, and the last symbol is the symbol corresponding to the guard interval; or two symbols from the start time of the first sub-slot are used to carry a communication signal or a communication channel, and the last

symbol is the symbol corresponding to the guard interval.

In some embodiments, the processing module 1320 is configured to implement a communication and/or sensing function based on a transmitted or received signal.

In some embodiments, the processing module 1320 is configured to implement a communication function based on a signal transmitted or received in a first time unit group.

In some embodiments, the processing module 1320 is configured to implement a sensing function based on a signal transmitted or received in the second time unit group.

In this embodiment, the transceiver module 1310 may be divided into at least one transmitting sub-module, such as a first transmitting sub-module, a second transmitting sub-module, and a third transmitting sub-module, each of which is configured to perform at least one of the aforementioned transmitting steps. The first transmitting sub-module is configured to transmit a signal in a first time unit group, the second transmitting sub-module is configured to transmit a signal in a second time unit group, and the third transmitting sub-module is configured to transmit time-domain configuration information; or the first transmitting sub-module is configured to transmit time-domain configuration information, the second transmitting sub-module is configured to transmit a signal in the first time unit group, and the third transmitting sub-module is configured to transmit a signal in the second time unit group; any two transmitting sub-modules may be combined into one transmitting sub-module; the embodiments do not limit the functions of different transmitting sub-modules; and/or

the transceiver module 1310 may be split into at least one receiving sub-module, each of which is used to perform at least one of the above-mentioned receiving steps, such as a first receiving sub-module, a second receiving sub-module, and a third receiving sub-module. The first receiving sub-module is configured to receive a signal in a first time unit group, the second receiving sub-module is configured to receive a signal in a second time unit group, and the third receiving sub-module is configured to receive time-domain configuration information; or the first receiving sub-module is configured to receive time-domain configuration information, the second receiving sub-module is configured to receive a signal in the first time unit group, and the third receiving sub-module is configured to receive a signal in the second time unit group; any two receiving sub-modules may be combined into one receiving sub-module; the embodiments do not limit the functions of different receiving sub-modules.

This embodiment is illustrated by taking one transceiver module 1310 as an example, and the number of transceiver modules 1310 is not limited.

For the functional introduction of the transceiver module 1310, please refer to the content of step 710 in the embodiments shown in FIG. 7.

FIG. 14 illustrates a block diagram of an apparatus for signal transmission according to an exemplary embodiment of the present disclosure. This apparatus may be implemented as a communication device or as a part of a communication device through software, hardware, or a combination of both. The apparatus includes at least one of a transceiver module 1410 or a processing module 1420.

The transceiver module 1410 is configured to transmit or receive the first signal and/or the second signal.

The time interval between the first signal and the second signal includes a predefined interval.

When the transceiver module 1410 is configured to perform the step of transmitting the first signal and/or the second signal, the transceiver module 1410 includes a transmitting module; when the transceiver module 1410 is configured to perform the step of receiving the first signal and/or the second signal, the transceiver module 1410 includes a receiving module. In some embodiments, the transceiver module 1410 only includes a transmitting module; and in some embodiments, the transceiver module 1410 only includes a receiving module. In the embodiments, the transceiver module 1410 is exemplified by simultaneously including both a transmitting module and a receiving module.

In some embodiments, the first time interval includes flexible time, measurement interval, guard interval, or the like, and the predefined interval is the full set or a subset of the first time interval.

In some embodiments, the first signal and the second signal satisfy at least one of the following constraint conditions: the end time of the second signal is not later than a time point that is earlier than the start time of the first signal by the predefined interval; the start time of the first signal is not earlier than a time point that is later than the end time of the second signal by the predefined interval; the time interval between the start time of the first signal and the end time of the second signal is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first signal and the second signal satisfy at least one of the following constraint conditions: the end time of the second signal is not later than the start time of the predefined interval, and the end time of the predefined interval is not later than the start time of the first signal; the start time of the first signal is not earlier than the end time of the predefined interval, and the start time of the predefined interval is not earlier than the end time of the second signal; the time interval between the start time of the first signal and the end time of the second signal is not shorter than the predefined interval.

Not later than can be equivalently expressed as earlier than or equal to, not earlier than can be equivalently expressed as later than or equal to, and not shorter than can be equivalently expressed as longer than or equal to.

The constraint conditions help to reduce transmission interference between the first signal and the second signal by imposing restrictions thereon.

In some embodiments, the predefined interval is associated with at least one of the following factors: different configurations, a bandwidth corresponding to the first signal, a bandwidth corresponding to the second signal; transmit power corresponding to the first signal, a transmit power corresponding to the second signal, a subcarrier spacing corresponding to the first signal, a subcarrier spacing corresponding to the second signal, a frequency range corresponding to the first signal, or a frequency range corresponding to the second signal.

Different configurations can correspond to different services. For instance, some configurations are used for wireless communication, and others are used for sensing services, which can be referred to as sensing configurations, including sensing services such as different sensing coverage requirements, different sensor configurations, and different sensing algorithms.

When the bandwidths corresponding to the first signal and the second signal are different, additional time is required to adjust the receiving range of the receiver in the apparatus for signal transmission.

The frequency range FR corresponding to the first signal and/or the second signal includes FR1 or FR2. FR1 is also referred to as the Sub-6 GHz frequency range, representing the low-frequency range, covering the frequency range from 450 MHz to 6 GHz. FR2 is also referred to as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, the time unit types respectively corresponding to the first signal and the second signal are different.

In some embodiments, the time unit type includes a first type adopting NCP and a second type adopting ECP.

Based on the first signal being a communication signal and the second signal being a sensing signal, the different types of time units corresponding to the first and second signals can meet the different service requirements of communication services and sensing services, thereby better supporting either communication services or sensing services.

Illustratively, the time-domain resources occupied by the first signal include at least one symbol, and the time-domain resources occupied by the second signal also include at least one symbol. The symbol length of the symbol corresponding to the first signal (first symbol type) and the symbol corresponding to the second signal (second symbol type) may be the same or different, and the symbol length includes a cyclic prefix. For example, both the first symbol type and the second symbol type adopt NCP or both adopt ECP. Adopting ECP is simpler, but the resource utilization efficiency is lower; alternatively, the first symbol type adopts NCP and the second symbol type adopts ECP. Adopting ECP can increase the sensing coverage distance.

In some embodiments, time unit types respectively corresponding to a part of the first signal and another part of the first signal are different; and/or

the time unit types respectively corresponding to a part of the second signal and another part of the second signal are different.

For example, the first signal corresponds to the first type, and the second signal corresponds to the second type.

For another example, the first signal corresponds to the first type, a part of the second signal corresponds to the first type, and another part of the second signal corresponds to the second type.

For another example, a part of the first signal corresponds to the first type, and a part of the second signal corresponds to the second type; and a part of the second signal corresponds to the first type, and another part of the second signal corresponds to the second type.

Different communication services or different sensing services have different requirements for signals. Therefore, different parts of the first signal can be applied to communication services with different requirements, and/or different parts of the second signal can be applied to sensing services with different requirements. Respectively corresponding to different time unit types can better support communication services or sensing services.

In some embodiments, the first time unit group is the time-domain resource allowed to be occupied by the first signal, and the second time unit group is the time-domain resource allowed to be occupied by the second signal. Each of the first time unit group and the second time unit group includes at least one time unit. The time unit includes at least one of a frame, a subframe, a slot, a sub-slot, a symbol group, or a symbol. In the embodiments of the present disclosure, the time unit is exemplified as a symbol for illustration.

In some embodiments, the first time interval is greater than or equal to a predefined interval, and the first time interval is at least one of or a subset of at least one of a cyclic prefix, a guard interval, a flexible time, or a measurement interval.

Optionally, the guard interval is explicitly defined in the first frame structure; the flexible time is specified by a

communication protocol or configured by a network device, or is implicitly defined by a constraint condition of a sensing signal or a communication signal. In the case where the first signal and the second signal are not in the same direction, the measurement interval required for switching the transmission direction is greater than or equal to the first time interval.

In the case where the first time interval is a subset of at least one of the aforementioned time periods, the other time periods within the aforementioned time periods, excluding the first time interval, are utilized for other functions. For instance, the start time period and the end time period are utilized for other functions, and the intermediate time period is the first time interval.

In some embodiments, the first time interval is at least one of a guard interval, a flexible time, or a measurement interval.

In some embodiments, the predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or a network device, or is implicitly defined by a constraint condition of a sensing signal or a communication signal; and in the case where the first signal and the second signal are not in the same direction, the measurement interval required for switching a transmission direction is greater than or equal to the predefined interval.

In the case where the predefined interval is a subset of at least one of the aforementioned time periods, the other time periods excluding the predefined interval are used for other functions. For example, the start time period and the end time period is used for other functions, and the intermediate time period is the predefined interval.

In some embodiments, the predefined interval is at least one of a cyclic prefix or a guard interval.

In scenarios where the first time interval (or predefined interval) is at least one of the aforementioned time periods, or where the first time interval (or predefined interval) is a subset of at least one of these time periods, configuring the first time interval (or predefined interval) based on different scenarios aligns more closely with practical needs. For instance, configuring the first time interval (or predefined interval) as a measurement interval allows an apparatus for signal transmission that only supports communication but not sensing to use this interval without requiring sensing-related information.

In some embodiments, the first time unit group is the time-domain resource allowed to be occupied by the first signal, and the second time unit group is the time-domain resource allowed to be occupied by the second signal. The first time unit group and the second time unit group are used to carry different signals or channels.

In some embodiments, the first time unit group can also be understood as any of the meanings of a set of first time units, a series of first time units, a plurality of first time units, a plurality of consecutive first time units, or the like, such as the N first time units ranked in the front position, or the N first time units ranked in the back position, wherein N is a positive integer.

In some embodiments, the first time unit group is used to carry a communication signal or a communication channel, and the second time unit group is used to carry a sensing signal or a sensing channel; or

the first time unit group is used to carry a communication signal or a communication channel, and the second time unit group is not used to carry a communication signal or a communication channel; or

the second time unit group is used to carry a sensing signal or a sensing channel, and the first time unit group is not used to carry a sensing signal or a sensing channel; or

the first time unit group is used to carry a communication signal or a communication channel, and the second time unit group is used to carry a sensing signal or a sensing channel and/or a communication signal or a communication channel; or

the first time unit group is used to carry a communication signal or a communication channel, and the second time unit group is used to carry both a sensing signal or a sensing channel and a communication signal or a communication channel. In the second time unit group, the priority of a communication signal or a communication channel is lower than that of a sensing signal or a sensing channel.

In some embodiments, the communication device acquires configuration information for a first time unit group and a second time unit group, and acquires relevant information for a first time interval through calculation.

In some embodiments, the apparatus for signal transmission acquires configuration information of the first time unit group and the second time unit group, and acquires information related to the first time interval through calculation.

In some embodiments, the apparatus for signal transmission acquires configuration information for the first time unit group, and the other time is collectively referred to as the first time interval.

In some embodiments, the communication signal or communication channel includes, but is not limited to:

downlink signal or downlink channel: at least one of PDSCH, SSB, DMRS, CSI-RS, PT-RS, TRS, or PRS; and

uplink signal or uplink channel: at least one of PUSCH, SRS, or PUCCH.

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), or CPRS.

For specific details of the first frame structure, reference is made to the embodiments shown in FIG. 8, and details are not described herein any further.

In some embodiments, the first frame structure includes a first time unit group, a second time unit group, and a first time interval.

Taking the example of using the first time unit group to carry a communication signal and the second time unit group to carry a sensing signal, for an apparatus for signal transmission that supports both communication and sensing, the first frame structure shown in FIG. 8(a) is predefined by a communication protocol or configured by a network apparatus. The communication signal is transmitted or received in the first time unit group, and the sensing signal is transmitted or received in the second time unit group. The first time interval follows the second time unit group.

In some embodiments, the first frame structure includes a first time unit group and a second time unit group, with a first time interval between the first time unit group and the second time unit group.

Taking the example of using the first time unit group to carry a communication signal and the second time unit group to carry a sensing signal, for an apparatus for signal transmission that supports both communication and sensing, the first frame structure shown in FIG. 8(b) is predefined by a communication protocol or configured by a network apparatus. The communication signal is transmitted or received in the first time unit group, and the sensing signal is transmitted or received in the second time unit group. There is a first time interval between the first time unit group and the second time unit group.

In some embodiments, the first frame structure includes a first time unit group and a first time interval.

In some embodiments, the first frame structure includes a second time unit group and a first time interval.

Taking the first time unit group used to carry a communication signal as an example, for an apparatus for signal transmission that only supports communication and does not support sensing, the first frame structure shown in FIG. 8(c) is predefined by a communication protocol or configured by a network apparatus. The time unit corresponding to the second time unit group is not used, or the time unit corresponding to the second time unit group is not used to carry a communication signal or a communication channel. The apparatus for signal transmission transmits or receives a communication signal in the first time unit group. The first time interval follows the first time unit group.

In some embodiments, at least one of time-domain information of the first time unit group, time-domain information of the second time unit group, or time-domain information of the first time interval is specified by a communication protocol or configured by a network apparatus, wherein the first time interval is greater than or equal to a predefined interval.

The first time unit group refers to the time-domain resource allowed to be occupied by the first signal, and the second time unit group refers to the time-domain resource allowed to be occupied by the second signal.

In some embodiments, the time-domain information of the first time unit group, the second time unit group, or the first time interval includes at least one of a start time (or start position), an end time (or end position), an absolute time length, a number of occupied time units, or a time-domain position of the occupied time units.

Based on the above information, when indicating the first time unit group, the second time unit group, or the first time interval, bits for indication can be saved. For example, when the first time unit group is at the beginning or end of the first slot, only indicating the absolute time length (or the number of occupied time units) is more economical compared to indicating the end time (or end position), start time (or start position), and absolute time length (or the number of occupied time units). The number of occupied time units can be the number of occupied slots, or the number of occupied symbols, or both the number of occupied slots and the number of symbols. For example, N slots are occupied, and the first M symbols of the slot following the $N^{th}$ slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; the time interval from the end time of the second time unit group to the end time of the first frame structure is the first time interval.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and the first time unit group corresponds to the first symbol type; the second time unit group starts after the end of the symbols of the last first time unit group and occupies Y symbols, and the second time unit group corresponds to the second symbol type; the guard interval is from the end of the symbols of the last second time unit group to the end time of the first slot; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 2, and is not elaborated further here.

The calculation rules for the first symbol type time, the second symbol type time, and the guard interval time are as follows:

$$\text{First symbol type time} = \begin{Bmatrix} 2192*64*X+16*64 & X<7 \\ 2192*64*X+32*64 & X\geq 7 \end{Bmatrix};$$

$$\text{Second symbol type time} = 2560*64*Y;$$

$$\text{Guard interval time} = 30720*64 - \text{the first symbol type time} - \text{the second symbol type time}.$$

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the second time unit group occupies Y time units from the start time of the first frame structure; the first time unit group occupies X time units forward from the end time of the first frame structure; and the first time interval exists between the second time unit group and the first time unit group.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the second time unit group occupies Y symbols from the start time of the first slot, and the second time unit group corresponds to the second symbol type; the first time unit group occupies X symbols counting backwards from the end time of the first slot, and corresponds to the first symbol type; a guard interval exists between the second time unit group and the first time unit group; X and Y are positive integers, and the sum of X and Y is less than or equal to 14 (NCP) or 12 (ECP).

Taking the example of a subcarrier spacing of 15kHz, with time units being symbols, where the second symbol type adopts ECP and the first symbol type adopts NCP, the configuration is as shown in Table 3, and is not further elaborated here.

The calculation rules for the first symbol type time, the second symbol type time, and the guard interval time are as follows:

$$\text{First symbol type time} = \begin{cases} 2192*64*X & X \le 7 \\ 2192*64*X+16*64 & X>7 \end{cases};$$

$$\text{Second symbol type time} = 2560*64*Y;$$

$$\text{Guard interval time} = 30720 * 64 - \text{first symbol type time} - \text{second symbol type time}.$$

In some embodiments, X and Y are positive integers, and the sum of X and Y is less than or equal to 14. $T_c$ represents the basic time unit of the NR system.

In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.

In some embodiments, the subcarrier spacings respectively corresponding to the first signal and the second signal are different.

Subcarrier spacing refers to the frequency spacing between adjacent subcarriers in an OFDM system. In an OFDM system, data is allocated to a plurality of parallel subcarriers for transmission, with each subcarrier corresponding to an independent frequency.

Illustratively, the first signal corresponds to subcarrier spacing 1, and the second signal corresponds to subcarrier spacing 2, with subcarrier spacing 1=15 kHz and subcarrier spacing 2=30 kHz.

According to different communication requirements or different sensing requirements, different subcarrier spacings are set to better support communication services or sensing services.

In some embodiments, subcarrier spacings respectively corresponding to a part of the first signal and another part of the first signal are different; and/or

the subcarrier spacings respectively corresponding to a part of the second signal and another part of the second signal are different.

For example, the first signal corresponds to the first subcarrier spacing type, and the second signal corresponds to the second subcarrier spacing type.

For another example, the first signal corresponds to the first subcarrier spacing type, a part of the second signal corresponds to the first subcarrier spacing type, and another part of the second signal corresponds to the second subcarrier spacing type.

For another example, a part of the first signal corresponds to the first subcarrier spacing type, and a part of the second signal corresponds to the second subcarrier spacing type; a part of the second signal corresponds to the first subcarrier spacing type, and another part of the second signal corresponds to the second subcarrier spacing type.

Different communication services or different sensing services have different requirements for signals; and therefore, different parts of the first signal can be applied to communication services with different requirements, and/or different parts of the second signal can be applied to sensing services with different requirements. Respectively corresponding to different types of subcarrier spacing can better support communication services or sensing services.

Using the first frame structure as the slot structure, the first time unit group includes at least one symbol, and the second time unit group includes at least one symbol. The first time interval is the guard interval, the subcarrier spacing corresponding to the first signal is 15kHz, and the subcarrier spacing corresponding to the second signal is 30kHz. The time unit is the symbol, and both the first symbol type and the second symbol type adopt ECP as an example. The configuration is shown in Table 4, which is not elaborated here. The guard interval time = total length of slot - number of symbols of the first symbol type - number of symbols of the second symbol type. Table 4 is calculated based on the example where the sum of X and Y is 12, and the sum of X and Y may also be 13, 11, or the like, which is not limited in the embodiments of the present disclosure.

In some embodiments, the predefined interval is specified by a communication protocol; alternatively, the predefined interval is configured by a network apparatus.

In some embodiments, the predefined interval is determined from a plurality of candidate intervals specified by a communication protocol or configured by a network apparatus.

The network apparatus configures the predefined interval through high-level signaling or physical layer signaling. The high-level refers to the protocol layers above the physical layer.

In a case where specified by a communication protocol, no network apparatus configuration is required, thereby saving signaling; and in a case where configured by the network device, diverse configuration manners are supported, allowing for configuration according to actual needs.

In some embodiments, the first time unit group is the time-domain resource allowed to be occupied by the first

signal, and the second time unit group is the time-domain resource allowed to be occupied by the second signal. The first time interval is greater than or equal to a predefined interval. At least one of the first time unit group, the second time unit group, or the first time interval constitutes a time unit group set. The time unit group set occurs periodically.

In some embodiments, the transceiver module 1410 is further configured to: transmit or receive time-domain configuration information. The time-domain configuration information is used to configure the time-domain positions of a time unit group set in at least one period.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, a first time unit group and a first time interval constitute a time unit group set.

In some embodiments, the second time unit group and the first time interval constitute a time unit group set.

In some embodiments, in a case where only the first time unit group (or the second time unit group) is configured, the other times in the time unit group set are the first time interval, that is, the first time interval is implicitly configured or indicated.

In some embodiments, the time unit group set is at least one of a frame, a subframe, a slot, a sub-slot, or a symbol group.

In some embodiments, time-domain position of the time unit group set within at least one period is configured in at least one of the following manners:

(1) a bitmap manner; or
(2) a SLIV manner.

Illustratively, in each of the at least one period, there are N slots, wherein N is a positive integer. Each of the N slots is referred to as a time unit group set, or a set of time units. FIG. 9 illustrates a schematic diagram of the configuration of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For example, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The embodiments of the present disclosure do not impose any limitations on this. M is a positive integer and is less than or equal to N.

In the case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and there are four first slots, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the other time-domain resources being time-domain resources occupied by the second type of first slot.

Alternatively, the sum of at least two types of first slots can be configured using any of the aforementioned configuration manners, and then the time-domain resources occupied by the second type of first slot can be configured using any of the configuration manners. The other time-domain resources are time-domain resources occupied by the first type of first slot.

By configuring the time-domain positions of a time unit group set in at least one period using a bitmap manner, the configuration of the time unit group set can be made more flexible. By configuring the time-domain positions of a time unit group set in at least one period using the SLIV manner, the configuration is more concise and easier to manage, suitable for simpler configuration requirements.

In the aforementioned embodiment, the first slot is used as an example for illustration. However, other time-domain resources such as the first sub-slot or the first symbol group can also be used, and this is not limited in the embodiments of the present disclosure.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or individual in space or on a map. Localization involves using data measured by sensors, such as GPS data or LiDAR data, to calculate the position of the object.

Range measurement refers to measuring the distance between an object and a reference point using sensors or technology. Common range measurement methods include using GPS, laser range measurement, ultrasonic waves, and the like.

Angle measurement refers to measuring a direction or angle of an object using sensors or technology. Typically, digital compasses, gyroscopes, angle sensors, and other devices are employed for angle measurement.

Speed measurement refers to measuring the moving speed of an object using sensors or technology. Speed measurement can be achieved through various methods, such as using radar speedometers, GPS speed measurement, photoelectric sensors, and the like.

Target imaging refers to capturing images or data of a target using sensors such as cameras, radar, or the like. Target imaging technology can provide visual information about the target, such as infrared imaging using thermal cameras.

Target detection refers to automatically detecting target objects in the environment through the analysis of sensor data. Target detection is typically implemented by identifying the location, shape, size, and other characteristics of objects using computer vision and pattern recognition techniques.

Target tracking refers to tracking the position and motion of an object across continuous time and space. Target tracking utilizes sensor data and motion models to predict and estimate the trajectory of the object.

Target identification refers to the process of recognizing and classifying detected targets. Target identification often employs computer vision and pattern recognition techniques to match the characteristics of the target with predefined patterns or databases, thereby determining the identity of the target.

In some embodiments, some or all of the symbols in the first slot are used to carry a sensing signal or a sensing channel, and/or all of the symbols in the second slot are used to carry a communication signal or a communication channel.

In some embodiments, in the first slot, symbols used to carry a sensing signal or a sensing channel and/or symbols corresponding to the guard interval are specified by a communication protocol or configured by a network apparatus, and other symbols in the first slot are used to carry a communication signal or a communication channel; or in the first slot, the symbols used to carry a communication signal or a communication channel and/or the symbols corresponding to the guard interval are specified by a communication protocol or configured by a network apparatus, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all of the symbols in the first sub-slot are used to carry a sensing signal or a sensing channel, and/or all of the symbols in the second sub-slot are used to carry a communication signal or a communication channel.

In some embodiments, in the first sub-slot, symbols used to carry a sensing signal or a sensing channel and/or symbols corresponding to a guard interval are specified by a communication protocol or configured by a network apparatus, and other symbols in the first sub-slot are used to carry a communication signal or a communication channel; or

in the first sub-slot, symbols used to carry a communication signal or a communication channel and/or symbols corresponding to the guard interval are specified by a communication protocol or configured by a network apparatus, and other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier

spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. Symbols are represented by white squares, and squares filled with diagonal lines represent Cyclic Prefixes (CPs). In this configuration, the sub-slot length is half of the slot length, that is, the first sub-slot adopting ECP includes 6 symbols, and the second sub-slot adopting NCP includes 7 symbols. At least one of the following configurations is performed by a network apparatus:

(1) The four symbols preceding the end time of the first sub-slot are symbols used to carry a sensing signal or a sensing channel, and/or symbols corresponding to the guard interval; alternatively, the four symbols preceding the end time of the first sub-slot are symbols corresponding to the guard interval.
(2) The two symbols from the start time of the first sub-slot are used to carry a communication signal or a communication channel; or the two symbols from the start time of the first sub-slot are symbols not used to carry a sensing signal or a sensing channel.
(3) Starting from the third symbol of the first sub-slot, three consecutive symbols are symbols used to carry a sensing signal or a sensing channel, and the last symbol is the symbol corresponding to the guard interval. Alternatively, two symbols starting from the start time of the first sub-slot are symbols used to carry a communication signal or a communication channel, and the last symbol is the symbol corresponding to the guard interval.

In some embodiments, the processing module 1420 is configured to implement a communication function and/or a sensing function based on the transmitted or received signal.

In some embodiments, the processing module 1420 is configured to implement a communication function based on the transmitted or received first signal.

In some embodiments, the processing module 1420 is configured to implement a sensing function based on the transmitted or received second signal.

In this embodiment, the transceiver module 1410 may be divided into at least one transmitting sub-module, such as a first transmitting sub-module, a second transmitting sub-module, and a third transmitting sub-module, each of which is configured to perform at least one of the transmitting steps mentioned above. The first transmitting sub-module is configured to transmit a first signal, the second transmitting sub-module is configured to transmit a second signal, and the third transmitting sub-module is configured to transmit time-domain configuration information; or the first transmitting sub-module is configured to transmit time-domain configuration information, the second transmitting sub-module is configured to transmit the first signal, and the third transmitting sub-module is configured to transmit the second signal.Any two transmitting sub-modules may be combined into one transmitting sub-module, the embodiments do not limit the functions of different transmitting sub-modules; and/or

the transceiver module 1410 may be split into at least one receiving sub-module, each of which is used to perform at least one of the aforementioned receiving steps, such as a first receiving sub-module, a second receiving sub-module, and a third receiving sub-module. The first receiving sub-module is configured to receive a first signal, the second receiving sub-module is configured to receive a second signal, and the third receiving sub-module is configured to receive time-domain configuration information; or the first receiving sub-module is configured to receive time-domain configuration information, the second receiving sub-module is configured to receive the first signal, and the third receiving sub-module is configured to receive the second signal. Any two receiving sub-modules may be combined into one receiving sub-module; the embodiments do not limit the functions of different receiving sub-modules.

The embodiments use a transceiver module 1410 as an example for illustration, and the number of transceiver modules 1410 is not limited.

For the functional introduction of the transceiver module 1410, please refer to the content of step 1110 in the embodiments shown in FIG. 11.

FIG. 15 illustrates a block diagram of an apparatus for transmitting configuration information according to an exemplary embodiment of the present disclosure. This apparatus can be implemented as a communication device or as a part of a communication device through software, hardware, or a combination of both. The apparatus includes at least one of a transceiver module 1510 and a processing module 1520.

The transceiver module 1510 is configured to transmit or receive time-domain configuration information.

The time-domain configuration information is used to configure at least one of the first time unit group, the second time unit group, or the first time interval; the first time unit group is the time-domain resource that is allowed to be occupied by the first signal, and the second time unit group is the time-domain resource that is allowed to be occupied by the second signal.

When the transceiver module 1510 is used to perform the step of transmitting time-domain configuration information, the transceiver module 1510 includes a transmitting module; when the transceiver module 1510 is used to perform the step of receiving time-domain configuration information, the transceiver module 1510 includes a receiving module. In some embodiments, the transceiver module 1510 only includes a transmitting module; in some embodiments, the transceiver module 1510 only includes a receiving module. In the embodiments, the transceiver module 1510 is exemplified by simultaneously including both a transmitting module and a receiving module.

In some embodiments, the first time unit group can also be interpreted as any of the following meanings: a set of first time units, a series of first time units, a plurality of first time units, a plurality of consecutive first time units, or the like. For example, it can refer to the N first time units ranked at the top, or the N first time units ranked at the bottom, wherein N is a positive integer.

In some embodiments, the first time interval includes flexible time, measurement interval, guard interval, or the like, and the predefined interval is the full set or a subset of the first time interval.

In some embodiments, the apparatus for transmitting configuration information acquires configuration information for a first time unit group and a second time unit group, and indirectly acquires relevant information for a first time interval.

In some embodiments, the apparatus for transmitting configuration information acquires configuration information for either the first time unit group or the second time unit group, and the other time is collectively referred to as the first time interval.

In some embodiments, the first time unit group and the second time unit group are used to carry different signals or channels.

In some embodiments, the first time unit group is used to carry a communication signal or a communication channel, and the second time unit group is used to carry a sensing signal or a sensing channel; or the first time unit group is used to carry a communication signal or a communication channel, and the second time unit group is not used to carry a communication signal or a communication channel; or the second time unit group is used to carry a sensing signal or a sensing channel, and the first time unit group is not used to carry a sensing signal or a sensing channel; or the first time unit group is used to carry a communication signal or a communication channel, and the second time unit group is used to carry a sensing signal or a sensing channel and/or a communication signal or a communication channel; or the first time unit group is used to carry a communication signal or a communication channel, and the second time unit group is used to carry a sensing signal or a sensing channel and a communication signal or a communication channel, with the priority of a communication signal or a communication channel being lower than that of a sensing signal or a sensing channel in the second time unit group.

In some embodiments, the communication signal or communication channel includes, but is not limited to:

downlink signal or downlink channel: at least one of PDSCH, SSB, DMRS, CSI-RS, PT-RS, TRS, or PRS; and
uplink signal or uplink channel: at least one of PUSCH, SRS, or PUCCH.

In some embodiments, the sensing signal includes, but is not limited to, at least one of: a localization signal, a range measurement signal, an angle measurement signal, a speed measurement signal, a target imaging signal, a target detection signal, a target tracking signal, or a target identification signal.

In some embodiments, the sensing signal includes, but is not limited to: DMRS (or enhanced DMRS), SRS (or enhanced SRS), CSI-RS (or enhanced CSI-RS), and CPRS.

In some embodiments, the duration of the first time interval is greater than or equal to the duration of the predefined interval.

In some embodiments, the first time unit group and the second time unit group satisfy at least one of the following constraint conditions: the end time of the second time unit group is not later than a time point that is earlier than the start time of the first time unit group by the predefined interval; the start time of the first time unit group is not earlier than a time point that is later than the end time of the second time unit group by the predefined interval; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

In some embodiments, the first time unit group and the second time unit group satisfy at least one of the following constraint conditions: the end time of the second time unit group is not later than the start time of the predefined interval, and the end time of the predefined interval is not later than the start time of the first time unit group; the start time of the first time unit group is not earlier than the end time of the predefined interval, and the start time of the predefined interval is not earlier than the end time of the second time unit group; the time interval between the start time of the first time unit group and the end time of the second time unit group is not shorter than the predefined interval.

Not later than can be equivalently expressed as earlier than or equal to, not earlier than can be equivalently expressed as later than or equal to, and not shorter than can be equivalently expressed as longer than or equal to.

The aforementioned constraint conditions, by imposing restrictions on the first and second time unit groups, can reduce transmission interference between signals carried within different time unit groups.

In some embodiments, the time-domain configuration information is used to configure a first time unit group, a second time unit group, and a first time interval.

Taking the example where the first time unit group is used to carry a communication signal and the second time unit group is used to carry a sensing signal, for an apparatus for transmitting configuration information that supports both communication and sensing, according to the time-domain configuration information, the communication signal is transmitted or received in the first time unit group, and the sensing signal is transmitted or received in the second time unit group. The first time interval follows the second time unit group.

In some embodiments, the time-domain configuration information is used to configure a first time unit group, a second time unit group, and a first time interval, with the first time interval existing between the first time unit group and the second time unit group.

Taking the example of using the first time unit group to carry a communication signal and the second time unit group to carry a sensing signal, for an apparatus for transmitting configuration information that supports both communication and sensing, according to the time-domain configuration information, the communication signal is transmitted or received in the first time unit group, and the sensing signal is transmitted or received in the second time unit group. There is a first time interval between the first time unit group and the second time unit group.

In some embodiments, the time-domain configuration information is used to configure the first time unit group and the first time interval.

In some embodiments, the time-domain configuration information is used to configure the second time unit group and the first time interval.

Taking the first time unit group used to carry a communication signal as an example, for an apparatus for transmitting configuration information that only supports communication and does not support sensing, the time unit corresponding to the second time unit group is not used, or the time unit corresponding to the second time unit group is not used to carry a communication signal or a communication channel. The apparatus for transmitting configuration information transmits or receives the communication signal in the first time unit group according to the time-domain configuration information. The first time interval follows the first time unit group.

In some embodiments, at least one of the first time unit group, the second time unit group, or the first time interval constitutes a time unit group set. The time unit group set occurs periodically.

At least one of the first time unit group, the second time unit group, or the first time interval constitutes a time unit group set, indicating that the three can appear individually, or in pairs as a whole, or all three together as a whole.

In some embodiments, the first time unit group, the second time unit group, and the first time interval constitute a time unit group set.

In some embodiments, a first time unit group and a first time interval constitute a time unit group set.

In some embodiments, the second time unit group and the first time interval constitute a time unit group set.

In some embodiments, in a case where only the first time unit group (or the second time unit group) is configured, the other times in the time unit group set are the first time interval, that is, the first time interval is implicitly configured or indicated.

In some embodiments, the time unit group set is at least one of a frame, a subframe, a slot, a sub-slot, or a symbol group.

In some embodiments, the time-domain configuration information further includes: the time-domain position of the set of time unit groups in at least one period.

In some embodiments, the time-domain position of the set of time unit groups within at least one period is configured in at least one of the following manners:

(1) a bitmap manner; or
(2) a SLIV manner.

Illustratively, in each of at least one period, there are N slots, wherein N is a positive integer. Each of the N slots is referred to as a time unit group set, or a set of time units. FIG. 9 illustrates a schematic diagram of the configuration of time-domain positions for a time unit group set according to an exemplary embodiment of the present disclosure, taking the first slot (i.e., the time unit group set) including a first symbol group (first time unit group), a second symbol group (second time unit group), and a first time interval as an example.

For the bitmap manner, if M out of N slots are designated for configuring the first slot, then the length of the bitmap is M. Specifically, each of the M bits indicates whether the corresponding slot is configured as the first slot. For instance, a bit value of 1 indicates that the corresponding slot is configured as the first slot, and a bit value of 0 indicates that the corresponding slot is not configured as the first slot. Alternatively, a bit value of 0 indicates that the corresponding slot is configured as the first slot, and a bit value of 1 indicates that the corresponding slot is not configured as the first slot. The

embodiments of the present disclosure do not impose any limitations on this. M is a positive integer and is less than or equal to N.

In the case where the period is a TDD period or XDD period, among N slots, only the downlink slots or flexible slots are used to configure the first slot, meaning that the length of the bitmap is equal to the number of all downlink slots and/or flexible slots.

Illustratively, with N=8 and M=8, a bit value of 1 (represented by a black square) indicates that it is configured as the first slot, and a bit value of 0 (represented by a white square) indicates that it is not configured as the first slot. The bitmap in FIG. 9(a) is 00101101, indicating that the third, fifth, sixth, and eighth slots from left to right are configured as the first slot; the first, second, fourth, and seventh slots are not configured as the first slot.

For the SLIV manner, SLIV is a method used to indicate the start position and length, that is, to indicate the start position of a first slot and the number of first slots.

Illustratively, in FIG. 9(b), the start position of the first slot is indicated as the start position of the third slot, and the number of first slots is four, meaning that the third to sixth slots from left to right are configured as the first slots.

In some embodiments, when there are at least two types of first slots, such as a first type of first slot and a second type of first slot, the first type of first slot and the second type of first slot are configured using the aforementioned configuration manners, respectively. For example, the first type of first slot is configured using a bitmap manner, and the second type of first slot is configured using an SLIV manner.

Alternatively, the sum of at least two types of first slots can be configured using any of the aforementioned configuration manners, and then the time-domain resources occupied by the first type of first slot can be configured using any of the configuration manners, with the other time-domain resources being the time-domain resources occupied by the second type of first slot.

Alternatively, the sum of at least two types of first slots can be configured using any of the aforementioned configuration manners, and then the time-domain resources occupied by the second type of first slot can be configured using any of the configuration manners. The other time-domain resources are the time-domain resources occupied by the first type of first slot.

By configuring the time-domain positions of a time unit group set in at least one period using a bitmap manner, the configuration of the time unit group set can be made more flexible. By configuring the time-domain positions of a time unit group set in at least one period using the SLIV manner, the configuration is more concise and easier to manage, suitable for simpler configuration requirements.

In the aforementioned embodiment, the first slot is used as an example for illustration. However, other time-domain resources such as the first sub-slot or the first symbol group can also be used, and this is not limited in the embodiments of the present disclosure.

In some embodiments, the duration of the predefined interval is less than or equal to the duration of the first time interval, and the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group, a subcarrier spacing corresponding to the second time unit group, a frequency range corresponding to the first time unit group, or a frequency range corresponding to the second time unit group.

Different configurations can correspond to different services. For instance, some configurations are used for wireless communication, and others are used for sensing services, which can be referred to as sensing configurations, including sensing services such as different sensing coverage requirements, different sensor configurations, and different sensing algorithms.

When the bandwidths corresponding to the first and second time unit groups are different, additional time is required to adjust the receiving range of the receiver in the apparatus for transmitting configuration information.

The Frequency Range (FR) corresponding to the first time unit group and/or the second time unit group includes FR1 or FR2. FR1 is also known as the Sub-6 GHz frequency range, representing the low-frequency range, covering the frequency range from 450 MHz to 6 GHz. FR2 is also known as the millimeter wave (mmWave) frequency range, representing the high-frequency range, covering the frequency range from 24 GHz to 100 GHz.

Based on the actual needs of communication or sensing, reasonable predefined intervals can be set, such as setting corresponding predefined intervals based on different configurations.

In some embodiments, the time unit types respectively corresponding to the first time unit group and the second time unit group are different.

In some embodiments, the time unit type includes a first type adopting NCP and a second type adopting ECP.

Based on the first time unit group being used to carry a communication signal or a communication channel, and the second time unit group being used to carry a sensing signal or a sensing channel, the different time unit types corresponding to the first and second time unit groups can meet the different service requirements of communication services and sensing services, thereby better supporting communication services or sensing services.

Illustratively, the first time unit group includes at least one symbol, and the second time unit group includes at least one symbol. The symbol length of the symbol (first symbol type) corresponding to the first time unit group is the same as or different from the symbol length of the symbol (second symbol type) corresponding to the second time unit group. The symbol length includes the cyclic prefix. For example, both the first symbol type and the second symbol type adopt NCP or both adopt ECP. Adopting ECP is simpler, but the resource utilization efficiency is lower; alternatively, the first symbol type adopts NCP and the second symbol type adopts ECP. Adopting ECP can increase the sensing coverage distance.

In some embodiments, time unit types respectively corresponding to a part of the first time unit group and another part of the first time unit group are different; and/or

the time unit types respectively corresponding to a part of the second time unit group and another part of the second time unit group are different.

For example, the first time unit group corresponds to the first type, and the second time unit group corresponds to the second type.

For another example, the first time unit group corresponds to the first type, a part of the second time unit group corresponds to the first type, and another part of the second time unit group corresponds to the second type.

For another example, a part of the first time unit group corresponds to the first type, and a part of the second time unit group corresponds to the second type; a part of the second time unit group corresponds to the first type, and another part of the second time unit group corresponds to the second type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different time unit types can better support communication services or sensing services.

In some embodiments, the transceiver module 1510 is further configured to: transmit or receive first configuration information.

The first configuration information is used to configure the time unit types respectively corresponding to the first time unit group and the second time unit group.

By transmitting or receiving the first configuration information, the first configuration information is used to configure the time unit types respectively corresponding to the first time unit group and the second time unit group, thereby more accurately configuring the time unit types respectively corresponding to different time unit groups.

In some embodiments, the first time unit group represents the time-domain resource that is allowed to be occupied by the first signal, and the second time unit group represents the time-domain resource that is allowed to be occupied by the second signal. Both the first and second time unit groups include at least one time unit. The time unit includes at least one of: frame, subframe, slot, sub-slot, symbol group, or symbol. In the embodiments of the present disclosure, the time unit is exemplified as a symbol for illustration.

In some embodiments, the first time interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to the first time interval.

In the case where the first time interval is a subset of at least one of the aforementioned time periods, the other time periods within the aforementioned time periods, excluding the first time interval, are used for other functions. For example, the start time period and the end time period are used for other functions, and the intermediate time period is the first time interval.

In some embodiments, the first time interval is at least one of a guard interval, a flexible time, or a measurement interval.

In some embodiments, the first time interval is greater than or equal to a predefined interval, and the predefined interval is at least one of or a subset of at least one of a cyclic prefix, a guard interval, a flexible time, or a measurement interval.

Optionally, the guard interval is explicitly defined in the first frame structure; the flexible time is specified by a communication protocol or configured by a network device, or is implicitly defined by a constraint condition of a sensing signal or a communication signal; in the case where the signal or channel carried in the first time unit group is not in the same direction as the signal or channel carried in the second time unit group, the measurement interval required for switching a transmission direction is greater than or equal to a predefined interval.

In the case where the predefined interval is a subset of at least one of the aforementioned time periods, the other time periods within the aforementioned time periods, excluding the predefined interval, are utilized for other functions. For instance, the start time period and the end time period are utilized for other functions, and the intermediate time period serves as the predefined interval.

In some embodiments, the predefined interval is at least one of a cyclic prefix and a guard interval.

In scenarios where the first time interval (or predefined interval) is at least one of the aforementioned time periods, or where the first time interval (or predefined interval) is a subset of at least one of these time periods, configuring the first time interval (or predefined interval) based on different scenarios aligns more closely with practical needs. For instance, configuring the first time interval (or predefined interval) as a measurement interval allows an apparatus for transmitting configuration information that only supports communication and not sensing to utilize this interval without acquiring sensing-related information.

In some embodiments, the transceiver module 1510 is configured to transmit or receive a signal in a time-domain resource that conforms to the first frame structure.

The first frame structure includes at least one of: a first time unit group, a second time unit group, or a first time interval.

For specific details of the first frame structure, please refer to the embodiments shown in FIG. 8, which are not elaborated here.

In some embodiments, at least one of time-domain information of the first time unit group, time-domain information of the second time unit group, or time-domain information of the first time interval is specified a communication protocol or configured by a network apparatus. The first time interval includes a predefined interval.

In some embodiments, the time-domain information of the first time unit group, the second time unit group, or the first time interval includes at least one of: a start time (or a start position), and end time (or an end position), an absolute time length, a number of occupied time units, or a time-domain position of the occupied time units.

Based on the aforementioned information, when indicating the first time unit group, the second time unit group, or the first time interval, bits for indication can be saved. For example, when the first time unit group is at the beginning or end of the first slot, only indicating the absolute time length (or the number of occupied time units) is more economical compared to indicating the end time (or end position), start time (or start position), and absolute time length (or the number of occupied time units). The number of occupied time units can be the number of occupied slots, or the number of occupied symbols, or both the number of occupied slots and the number of symbols. For instance, N slots are occupied, and the first M symbols of the slot following the $N^{th}$ slot are also occupied, wherein N and M are positive integers.

**For the first frame structure 1:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the first time unit group occupies X time units from the start time of the first frame structure; the second time unit group occupies Y time units from the end time of the first time unit group; the first time interval is from the end time of the second time unit group to the end time of the first frame structure.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the first time unit group occupies X symbols from the start time of the first slot, and the first time unit group corresponds to the first symbol type; the second time unit group starts after the end of the symbols of the last first time unit group and occupies Y symbols, and the second time unit group corresponds to the second symbol type; the guard interval is from the end of the symbols of the last second time unit group to the end time of the first slot; X and Y are positive integers, and the sum of X and Y is less than or equal to 14 (NCP) or 12 (ECP).

Taking the example where the subcarrier spacing is 15kHz, the time unit is a symbol, the second symbol type adopts ECP, and the first symbol type adopts NCP, the configuration is as shown in Table 2, which is not elaborated further here.

The calculation rules for the first symbol type time, the second symbol type time, and the guard interval time are as follows:

$$\text{First symbol type time} = \begin{cases} 2192*64*X+16*64 & X<7 \\ 2192*64*X+32*64 & X\geq 7 \end{cases};$$

$$\text{Second symbol type time} = 2560*64*Y;$$

$$\text{Guard interval time} = 30720*64 - \text{the first symbol type time} - \text{the second symbol type time.}$$

In some embodiments, X and Y are positive integers, and the sum of X and Y is less than or equal to 14. $T_c$ represents the basic time unit of the NR system.

**For the first frame structure 2:**

From the perspective of absolute time, time-domain information includes all or part of the following: the start time of the first time unit group, the end time of the first time unit group, the absolute time length of the first time unit group, the start time of the second time unit group, the end time of the second time unit group, the absolute time length of the second time unit group, the start time of the first time interval, the end time of the first time interval, and the absolute time length of the first time interval.

From the perspective of the number of occupied time units, the second time unit group occupies Y time units from the start time of the first frame structure; the first time unit group occupies X time units forward from the end time of the first frame structure; and the first time interval exists between the second time unit group and the first time unit group.

Taking the first frame structure as the slot structure, where the first time unit group includes at least one symbol, the second time unit group includes at least one symbol, and the first time interval is a guard interval as an example, from the perspective of absolute time, the time-domain information includes all or part of the start time of the first symbol type, the end time of the first symbol type, the absolute time length of the first symbol type, the start time of the second symbol type, the end time of the second symbol type, the absolute time length of the second symbol type, the start time of the guard interval, the end time of the guard interval, and the absolute time length of the guard interval.

From the perspective of the number of occupied time units, the second time unit group occupies Y symbols from the start time of the first slot, and the second time unit group corresponds to the second symbol type; the first time unit group occupies X symbols counting backwards from the end time of the first slot, and corresponds to the first symbol type; there is a guard interval between the second time unit group and the first time unit group; X and Y are positive integers, and the sum of X and Y is less than or equal to 14 (NCP) or 12 (ECP).

Taking the example of a subcarrier spacing of 15kHz, with the time unit being a symbol, where the second symbol type adopts ECP and the first symbol type adopts NCP, the configuration is as shown in Table 3, and is not further elaborated here.

The calculation rules for the first symbol type time, the second symbol type time, and the guard interval time are as follows:

$$\text{First symbol type time} = \begin{cases} 2192*64*X & X\leq 7 \\ 2192*64*X+16*64 & X>7 \end{cases};$$

$$\text{Second symbol type time} = 2560*64*Y;$$

$$\text{Guard interval time} = 30720*64 - \text{the first symbol type time} - \text{the second symbol type time.}$$

In some embodiments, X and Y are positive integers, and the sum of X and Y is less than or equal to 14. $T_c$ represents the basic time unit of the NR system.

In the aforementioned configuration, it is only necessary to explicitly configure any two of the first symbol type time, the second symbol type time, and the guard interval time, with the remaining one being implicitly obtained. The number of symbols corresponding to the guard interval can be implicitly obtained by configuring the number of symbols of the first symbol type and the number of symbols of the second symbol type.

In some embodiments, the subcarrier spacings respectively corresponding to the first time unit group and the second time unit group are different.

Subcarrier spacing refers to the frequency spacing between adjacent subcarriers in an OFDM system. In an

OFDM system, data is allocated to a plurality of parallel subcarriers for transmission, with each subcarrier corresponding to an independent frequency.

Illustratively, the first time unit group corresponds to subcarrier spacing 1, the second time unit group corresponds to subcarrier spacing 2. Subcarrier spacing 1 is equal to 15kHz and subcarrier spacing 2 is equal to 30kHz.

According to different communication requirements or different sensing requirements, different subcarrier spacings are set to better support communication services or sensing services.

In some embodiments, subcarrier spacings respectively corresponding to a part of the first time unit group and another part of the first time unit group are different; and/or

the subcarrier spacings respectively corresponding to a part of the second time unit group and another part of the second time unit group are different.

For example, the first time unit group corresponds to the first subcarrier spacing type, and the second time unit group corresponds to the second subcarrier spacing type.

For another example, the first time unit group corresponds to the first subcarrier spacing type, a part of the second time unit group corresponds to the first subcarrier spacing type, and another part of the second time unit group corresponds to the second subcarrier spacing type.

For another example, a part of the first time unit group corresponds to the first subcarrier spacing type, and a part of the second time unit group corresponds to the second subcarrier spacing type; a part of the second time unit group corresponds to the first subcarrier spacing type, and another part of the second time unit group corresponds to the second subcarrier spacing type.

Different communication services or different sensing services have different requirements for signals; and therefore, different parts of the first time unit group can be applied to communication services with different requirements, and/or different parts of the second time unit group can be applied to sensing services with different requirements. Respectively corresponding to different types of subcarrier spacing can better support communication services or sensing services.

Taking the first frame structure as the slot structure, the first time unit group includes at least one symbol, and the second time unit group includes at least one symbol. The first time interval is the guard interval, the subcarrier spacing corresponding to the first time unit group is 15kHz, and the subcarrier spacing corresponding to the second time unit group is 30kHz. The time unit is the symbol, and both the first symbol type and the second symbol type adopt ECP as an example, the configuration is as shown in Table 4, which is not elaborated here. The guard interval time = total length of the slot - number of symbols of the first symbol type - number of symbols of the second symbol type. Table 4 is calculated based on the example where the sum of X and Y is 12. The sum of X and Y may also be 13, 11, or the like, which is not limited in the embodiments of the present disclosure.

In some embodiments, the transceiver module 1510 is further configured to transmit or receive second configuration information.

The second configuration information is used to configure the subcarrier spacings respectively corresponding to the first time unit group and the second time unit group.

By transmitting or receiving the second configuration information, the second configuration information is used to configure the subcarrier spacings respectively corresponding to the first time unit group and the second time unit group, thereby more accurately configuring the subcarrier spacings respectively corresponding to different time unit groups.

In some embodiments, the duration of the predefined interval is less than or equal to the duration of the first time interval, and the predefined interval is specified by the communication protocol; alternatively, the predefined interval is configured by the network device.

In some embodiments, the predefined interval is determined from a plurality of candidate intervals specified by a communication protocol or configured by a network apparatus.

The network apparatus configures the predefined interval through high-level signaling or physical layer signaling. The high-level refers to the protocol layers above the physical layer.

In a case where specified by the communication protocol, no network apparatus configuration is required, thereby saving signaling; and in a case where configured by the network device, diverse configuration manners are supported, allowing for configuration according to actual needs.

In some embodiments, the sensing service includes at least one of sensing, localization, range measurement, angle measurement, speed measurement, target imaging, target detection, target tracking, or target identification.

Localization refers to the process of estimating or determining the precise location of an object, vehicle, or individual in space or on a map. Localization involves using data measured by sensors, such as GPS data or LiDAR data, to calculate the position of the object.

Range measurement refers to measuring the distance between an object and a reference point using sensors or technology. Common range measurement methods include using GPS, laser range measurement, ultrasonic waves, and the like.

Angle measurement refers to measuring the direction or angle of an object using sensors or technology. Digital

compasses, gyroscopes, angle sensors, and the like are commonly used for angle measurement.

Speed measurement refers to measuring the moving speed of an object using sensors or technology. Speed measurement can be achieved through various methods, such as using radar speedometers, GPS speed measurement, photoelectric sensors, or the like.

Target imaging refers to the process of capturing images or data of a target using sensors such as cameras, radar, or the like. Target imaging technology can provide visual information about the target, such as infrared imaging using thermal cameras.

Target detection refers to automatically detecting target objects in the environment through the analysis of sensor data. Target detection is typically implemented by identifying the location, shape, size, and other characteristics of objects using computer vision and pattern recognition techniques.

Target tracking refers to tracking the position and motion of an object across continuous time and space. Target tracking utilizes sensor data and motion models to predict and estimate the trajectory of the object.

Target identification refers to the process of recognizing and classifying detected targets. Target Identification often employs computer vision and pattern recognition techniques to match the characteristics of the targets with predefined patterns or databases, thereby determining the identity of the targets.

In some embodiments, some or all symbols in the first slot are used to carry a sensing signal or a sensing channel, and/or all symbols in the second slot are used to carry a communication signal or a communication channel.

In some embodiments, in the first slot, symbols used to carry a sensing signal or a sensing channel and/or symbols corresponding to the guard interval are specified by a communication protocol or configured by a network apparatus, and other symbols in the first slot are used to carry a communication signal or a communication channel; or in the first slot, symbols used to carry a communication signal or a communication channel and/or symbols corresponding to the guard interval are specified by a communication protocol or configured by a network apparatus, and other symbols in the first slot are used to carry a sensing signal or a sensing channel.

In some embodiments, the first slot adopts ECP, and the second slot adopts NCP.

In some embodiments, the first slot adopts subcarrier spacing 1, and the second slot adopts subcarrier spacing 2.

Alternatively, the symbols used for sensing in the first slot adopt subcarrier spacing 1, and other symbols adopt subcarrier spacing 2, wherein subcarrier spacing 1 is less than or equal to subcarrier spacing 2.

Alternatively, some first slots adopt subcarrier spacing 1, and some first slots adopt subcarrier spacing 2.

In some embodiments, when the first slot includes a first sub-slot and a second sub-slot, some or all of the symbols in the first sub-slot are used to carry a sensing signal or a sensing channel, and/or all of the symbols in the second sub-slot are used to carry a communication signal or a communication channel.

In some embodiments, in the first sub-slot, symbols used to carry a sensing signal or a sensing channel and/or symbols corresponding to the guard interval are specified by a communication protocol or configured by a network apparatus, and other symbols in the first sub-slot are used to carry a communication signal or a communication channel; or in the first sub-slot, symbols used to carry a communication signal or a communication channel and/or symbols corresponding to the guard interval are specified by a communication protocol or configured by a network apparatus, and other symbols in the first sub-slot are used to carry a sensing signal or a sensing channel.

In some embodiments, the symbols used to carry the sensing signal or the sensing channel include a guard interval.

In some embodiments, the first sub-slot adopts ECP, and the second sub-slot adopts NCP.

In some embodiments, the first sub-slot adopts subcarrier spacing 1, and the second sub-slot adopts subcarrier spacing 2.

Alternatively, the symbols used for sensing in the first sub-slot adopt subcarrier spacing 1, and other symbols adopt subcarrier spacing 2, wherein subcarrier spacing 1 is less than or equal to subcarrier spacing 2.

Alternatively, some first sub-slots adopt subcarrier spacing 1, and some first sub-slots adopt subcarrier spacing 2.

FIG. 10 illustrates a schematic diagram of symbol configuration according to an exemplary embodiment of the present disclosure. Symbols are represented by white squares, and squares filled with diagonal lines represent cyclic prefixes (CPs). In this configuration, the sub-slot length is half of the slot length, that is, the first sub-slot adopting ECP includes 6 symbols, and the second sub-slot adopting NCP includes 7 symbols. At least one of the following configurations is performed by a network apparatus:

(1) The four symbols preceding the end time of the first sub-slot are symbols used to carry a sensing signal or a sensing channel, and/or symbols corresponding to the guard interval; alternatively, the four symbols preceding the end time of the first sub-slot are symbols corresponding to the guard interval.
(2) The two symbols from the start time of the first sub-slot are used to carry a communication signal or a communication channel; or the two symbols from the start time of the first sub-slot are symbols not used to carry a sensing signal or a sensing channel.

(3) Starting from the third symbol of the first sub-slot, three consecutive symbols are symbols used to carry a sensing signal or a sensing channel, and the last symbol is the symbol corresponding to the guard interval. Alternatively, two symbols starting from the start time of the first sub-slot are symbols used to carry a communication signal or a communication channel, and the last symbol is the symbol corresponding to the guard interval.

In some embodiments, the processing module 1520 is configured to implement a communication function and/or a sensing function based on a transmitted or received signal.

In some embodiments, the processing module 1520 is configured to implement a communication function based on the transmitted or received first signal, wherein the first signal is transmitted or received based on time-domain configuration information.

In some embodiments, the processing module 1520 is configured to implement a sensing function based on the transmitted or received second signal, wherein the second signal is transmitted or received based on time-domain configuration information.

In this embodiment, the transceiver module 1510 may be split into at least one transmitting sub-module, each of which is used to perform at least one of the aforementioned transmitting steps, such as a first transmitting sub-module, a second transmitting sub-module, and a third transmitting sub-module. The first transmitting sub-module is configured to transmit time-domain configuration information, the second transmitting sub-module is configured to transmit first configuration information, and the third transmitting sub-module is configured to transmit second configuration information; or the first transmitting sub-module is configured to transmit first configuration information, the second transmitting sub-module is configured to transmit second configuration information, and the third transmitting sub-module is configured to transmit time-domain configuration information; any two transmitting sub-modules may be combined into one transmitting sub-module; the embodiments do not limit the functions of different transmitting sub-modules.

In the embodiments, the transceiver module 1510 may be divided into a plurality of receiving sub-modules, such as a first receiving sub-module, a second receiving sub-module, and a third receiving sub-module, each of which is configured to perform at least one of the aforementioned receiving steps. The first receiving sub-module is configured to receive time-domain configuration information, the second receiving sub-module is configured to receive first configuration information, and the third receiving sub-module is configured to receive second configuration information; or the first receiving sub-module is configured to receive first configuration information, the second receiving sub-module is configured to receive second configuration information, and the third receiving sub-module is configured to receive time-domain configuration information; any two receiving sub-modules may be combined into one receiving sub-module; this embodiment does not limit the functions of different receiving sub-modules.

This embodiment uses one transceiver module 1510 as an example for illustration, and the number of transceiver modules 1510 is not limited.

For the functional introduction of the transceiver module 1510, please refer to the content of step 1210 in the embodiments shown in FIG. 12.

FIG. 16 illustrates the structural schematic diagram of a communication device 1600 according to an exemplary embodiment of the present disclosure. The communication device 1600 includes a terminal device or a network device. The communication device 1600 includes: a processor 1601, a receiver 1602, a transmitter 1603, a memory 1604, and a bus 1605.

The processor 1601 includes one or more processing cores, and executes various functional applications and information processing by running software programs and modules.

The receiver 1602 and the transmitter 1603 can be implemented as a transceiver component, which can be a communication chip and can be referred to as a transceiver. In some embodiments, the receiver 1602 can be used to implement the functions and steps related to receiving in at least one of the aforementioned transceiver modules 1310, 1410, and 1510. In some embodiments, the transmitter 1603 can be used to implement the functions and steps related to transmitting in at least one of the aforementioned transceiver modules 1310, 1410, and 1510.

The memory 1604 is connected to the processor 1601 via the bus 1605.

The memory 1604 is configured to store at least one instruction, and the processor 1601 is configured to execute the at least one instruction, to implement each step in the above method embodiments.

In addition, the memory 1604 may be implemented by any type of volatile or non-volatile storage device, or a combination thereof. The volatile or non-volatile storage device includes, but is not limited to: a magnetic disk or an optical disk, an electrically-erasable programmable read only memory (EEPROM), an erasable programmable read only memory (EPROM), a static random-access memory (SRAM), a read-only memory (ROM), a magnetic storage, a flash memory, and a programmable read-only memory (PROM).

In some embodiments, the receiver 1602 performs signal/data reception independently, or the processor 1601 controls the receiver 1602 to perform signal/data reception, or the processor 1601 requests the receiver 1602 to perform signal/data reception, or the processor 1601 cooperates with the receiver 1602 to perform signal/data reception.

In some embodiments, the transmitter 1603 independently transmits signals/data, or the processor 1601

controls the transmitter 1603 to transmit signals/data, or the processor 1601 requests the transmitter 1603 to transmit signals/data, or the processor 1601 cooperates with the transmitter 1603 to transmit signals/data.

In exemplary embodiments, a computer-readable storage medium is also provided. The computer-readable storage medium stores at least one program. The at least one program is loaded and executed by a processor to implement the method for signal transmission or the method for transmitting configuration information according to the various method embodiments described above.

In exemplary embodiments, a computer program product or computer program is also provided, which includes computer instructions stored in a computer-readable storage medium. The processor retrieves the computer instructions from the computer-readable storage medium and executes the computer instructions to implement the method for signal transmission or the method for transmitting configuration information according to the various method embodiments described above.

Those skilled in the art can understand that all or part of the steps for implementing the above embodiments can be implemented by hardware, or alternatively, can be implemented by a program instructing relevant hardware. The program can be stored in a computer-readable storage medium, and the aforementioned storage medium can be a ROM, a magnetic disk, an optical disk, or the like.

Described above are merely optional embodiments of the present disclosure and are not intended to limit the present disclosure. Any modifications, equivalent substitutions, improvements, or the like, made within the concept and principle of the present disclosure should fall within the protection scope of the present disclosure.

## Claims

**1.** A method for signal transmission, performed by a communication device, the method comprising:

transmitting or receiving a signal in a time-domain resource that conforms to a first frame structure;
wherein the first frame structure comprises at least one of a first time unit group, a second time unit group, or a first time interval.

**2.** The method according to claim 1, wherein a duration of the first time interval is greater than or equal to a duration of a predefined interval.

**3.** The method according to claim 2, wherein the first time unit group and the second time unit group satisfy at least one of the following constraint conditions:

an end time of the second time unit group is not later than a time point that is earlier than a start time of the first time unit group by the predefined interval;
a start time of the first time unit group is not earlier than a time point that is later than an end time of the second time unit group by the predefined interval; or
a time interval between a start time of the first time unit group and an end time of the second time unit group is not shorter than the predefined interval.

**4.** The method according to claim 2 or 3, wherein the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group, a subcarrier spacing corresponding to the second time unit group, a frequency range corresponding to the first time unit group, or a frequency range corresponding to the second time unit group.

**5.** The method according to any one of claims 1 to 4, wherein time unit types respectively corresponding to the first time unit group and the second time unit group are different.

**6.** The method according to any one of claims 1 to 4, wherein time unit types respectively corresponding to a part of the first time unit group and another part of the first time unit group are different; and/or time unit types respectively corresponding to a part of the second time unit group and another part of the second time unit group are different.

**7.** The method according to claim 5 or 6, wherein the time unit types comprise a first type adopting a normal cyclic prefix (NCP) and a second type adopting an extended cyclic prefix (ECP).

8. The method according to any one of claims 1 to 4, wherein subcarrier spacings respectively corresponding to the first time unit group and the second time unit group are different.

9. The method according to any one of claims 1 to 4, wherein subcarrier spacings respectively corresponding to a part of the first time unit group and another part of the first time unit group are different; and/or subcarrier spacings respectively corresponding to a part of the second time unit group and another part of the second time unit group are different.

10. The method according to any one of claims 2 to 4, wherein the predefined interval is specified by a communication protocol or configured by a network device.

11. The method according to claim 10, wherein the predefined interval is determined from a plurality of candidate intervals specified by the communication protocol or configured by the network device.

12. The method according to any one of claims 2 to 4, wherein at least one of time-domain information of the first time unit group, time-domain information of the second time unit group, or time-domain information of the first time interval is specified by a communication protocol or configured by a network device.

13. The method according to claim 12, wherein the time-domain information comprises at least one of a start time, an end time, an absolute time length, a number of occupied time units, or a time-domain position of the occupied time units.

14. The method according to any one of claims 1 to 13, wherein each of the first time unit group and the second time unit group comprises at least one time unit, wherein the time unit comprises at least one of a frame, a subframe, a slot, a sub-slot, a symbol group, or a symbol.

15. The method according to any one of claims 1 to 13, wherein the first time interval is at least one of or a subset of at least one of a cyclic prefix, a guard interval, a flexible time, or a measurement interval.

16. The method according to any one of claims 1 to 13, wherein the first time interval is greater than or equal to a predefined interval, wherein the predefined interval is at least one of or a subset of at least one of a cyclic prefix, a guard interval, a flexible time, or a measurement interval.

17. The method according to any one of claims 1 to 16, wherein at least one of the first time unit group, the second time unit group, or the first time interval constitutes a time unit group set, wherein the time unit group set occurs periodically.

18. The method according to claim 17, further comprising:
transmitting or receiving time-domain configuration information, wherein the time-domain configuration information is used to configure a time-domain position of the time unit group set in at least one period.

19. The method according to claim 18, wherein the time-domain position of the time unit group set in the at least one period is configured in at least one of a bitmap manner or a start and length indicator value (SLIV) manner.

20. The method according to any one of claims 1 to 19, wherein the first time unit group and the second time unit group are used to carry different signals or channels.

21. The method according to claim 20, wherein the first time unit group and the second time unit group being used to carry different signals or channels comprises:

the first time unit group is used to carry a communication signal or a communication channel, and the second time unit group is used to carry a sensing signal or a sensing channel; or
the first time unit group is used to carry the communication signal or the communication channel, and the second time unit group is not used to carry the communication signal or the communication channel; or
the second time unit group is used to carry the sensing signal or the sensing channel, and the first time unit group is not used to carry the sensing signal or the sensing channel; or
the first time unit group is used to carry the communication signal or the communication channel, and the second time unit group is used to carry the sensing signal or the sensing channel and/or the communication signal or the communication channel.

**22.** A method for signal transmission, performed by a communication device, the method comprising:

transmitting or receiving a first signal and/or a second signal;
wherein a time interval between the first signal and the second signal comprises a predefined interval.

**23.** The method according to claim 22, wherein the first signal and the second signal satisfy at least one of the following constraint conditions:

an end time of the second signal is not later than a time point that is earlier than a start time of the first signal by the predefined interval;
a start time of the first signal is not earlier than a time point that is later than an end time of the second signal by the predefined interval; or
a time interval between a start time of the first signal and an end time of the second signal is not shorter than the predefined interval.

**24.** The method according to claim 22 or 23, wherein the predefined interval is associated with at least one of the following factors: different configurations, a bandwidth corresponding to the first signal, a bandwidth corresponding to the second signal, a transmit power corresponding to the first signal, a transmit power corresponding to the second signal, a subcarrier spacing corresponding to the first signal, a subcarrier spacing corresponding to the second signal; a frequency range corresponding to the first signal, or a frequency range corresponding to the second signal.

**25.** The method according to any one of claims 22 to 24, wherein time unit types respectively corresponding to the first signal and the second signal are different.

**26.** The method according to any one of claims 22 to 24, wherein time unit types respectively corresponding to a part of the first signal and another part of the first signal are different; and/or time unit types respectively corresponding to a part of the second signal and another part of the second signal are different.

**27.** The method according to claim 25 or 26, wherein the time unit types comprise a first type adopting a normal cyclic prefix (NCP) and a second type adopting an extended cyclic prefix (ECP).

**28.** The method according to any one of claims 22 to 24, wherein subcarrier spacings respectively corresponding to the first signal and the second signal are different.

**29.** The method according to any one of claims 22 to 24, wherein subcarrier spacings respectively corresponding to a part of the first signal and another part of the first signal are different; and/or subcarrier spacings respectively corresponding to a part of the second signal and another part of the second signal are different.

**30.** The method according to any one of claims 22 to 29, wherein the predefined interval is specified by a communication protocol or configured by a network device.

**31.** The method according to claim 30, wherein the predefined interval is determined from a plurality of candidate intervals specified by the communication protocol or configured by the network device.

**32.** The method according to any one of claims 22 to 29, wherein at least one of time-domain information of a first time unit group, time-domain information of a second time unit group, or time-domain information of a first time interval is specified by a communication protocol or configured by a network device, wherein the first time interval is greater than or equal to the predefined interval; wherein the first time unit group is a time-domain resource allowed to be occupied by the first signal, and the second time unit group is a time-domain resource allowed to be occupied by the second signal.

**33.** The method according to claim 32, wherein the time-domain information comprises at least one of a start time, an end time, an absolute time length, a number of occupied time units, or a time-domain position of the occupied time units.

**34.** The method according to any one of claims 22 to 33, wherein a first time unit group is a time-domain resource allowed to be occupied by the first signal, and a second time unit group is a time-domain resource allowed to be occupied by the second signal, wherein each of the first time unit group and the second time unit group comprises at least one time unit, wherein the time unit comprises at least one of a frame, a subframe, a slot, a sub-slot, a symbol group, or a symbol.

**35.** The method according to any one of claims 22 to 33, wherein a first time interval is greater than or equal to the predefined interval, wherein the first time interval is at least one of or a subset of at least one of a cyclic prefix, a guard interval, a flexible time, or a measurement interval.

**36.** The method according to any one of claims 22 to 33, wherein the predefined interval is at least one of or a subset of at least one of a cyclic prefix, a guard interval, a flexible time, or a measurement interval.

**37.** The method according to any one of claims 22 to 36, wherein a first time unit group is a time-domain resource allowed to be occupied by the first signal, a second time unit group is a time-domain resource allowed to be occupied by the second signal, and a first time interval is greater than or equal to the predefined interval, wherein at least one of the first time unit group, the second time unit group, or the first time interval constitutes a time unit group set, wherein the time unit group set occurs periodically.

**38.** The method according to claim 37, further comprising:
transmitting or receiving time-domain configuration information, wherein the time-domain configuration information is used to configure a time-domain position of the time unit group set in at least one period.

**39.** The method according to claim 38, wherein the time-domain position of the time unit group set in the at least one period is configured in at least one of a bitmap manner or a start and length indicator value (SLIV) manner.

**40.** The method according to any one of claims 22 to 39, wherein a first time unit group is a time-domain resource allowed to be occupied by the first signal, and a second time unit group is a time-domain resource allowed to be occupied by the second signal, wherein the first time unit group and the second time unit group are used to carry different signals or channels.

**41.** The method according to claim 40, wherein the first time unit group and the second time unit group being used to carry different signals or channels comprises:

the first time unit group is used to carry a communication signal or a communication channel, and the second time unit group is used to carry a sensing signal or a sensing channel; or
the first time unit group is used to carry the communication signal or the communication channel, and the second time unit group is not used to carry the communication signal or the communication channel; or
the second time unit group is used to carry the sensing signal or the sensing channel, and the first time unit group is not used to carry the sensing signal or the sensing channel; or
the first time unit group is used to carry the communication signal or the communication channel, and the second time unit group is used to carry the sensing signal or the sensing channel and/or the communication signal or the communication channel.

**42.** A method for transmitting configuration information, performed by a communication device, the method comprising:

transmitting or receiving time-domain configuration information, wherein the time-domain configuration information is used to configure at least one of a first time unit group, a second time unit group, or a first time interval; wherein the first time unit group is a time-domain resource allowed to be occupied by a first signal, and the second time unit group is a time-domain resource allowed to be occupied by a second signal.

**43.** The method according to claim 42, wherein a duration of the first time interval is greater than or equal to a duration of a predefined interval.

**44.** The method according to claim 43, wherein the first time unit group and the second time unit group satisfy at least one of the following constraint conditions:

an end time of the second time unit group is not later than a time point that is earlier than a start time of the first time unit group by the predefined interval;
a start time of the first time unit group is not earlier than a time point that is later than an end time of the second time unit group by the predefined interval; or
a time interval between a start time of the first time unit group and an end time of the second time unit group is not shorter than the predefined interval.

45. The method according to claim 43 or 44, wherein the time-domain configuration information comprises at least one of time-domain information of the first time unit group, time-domain information of the second time unit group, or time-domain information of the first time interval.

46. The method according to claim 45, wherein the time-domain information comprises at least one of a start time, an end time, an absolute time length, a number of occupied time units, or a time-domain position of the occupied time units.

47. The method according to any one of claims 42 to 46, wherein at least one of the first time unit group, the second time unit group, or the first time interval constitutes a time unit group set, wherein the time unit group set occurs periodically.

48. The method according to claim 47, wherein the time-domain configuration information further comprises a time-domain position of the time unit group set in at least one period.

49. The method according to claim 48, wherein the time-domain position of the time unit group set is configured in at least one of a bitmap manner or a start and length indicator value (SLIV) manner.

50. The method according to claim 43 or 44, wherein the predefined interval is associated with at least one of the following factors: different configurations, a bandwidth corresponding to the first time unit group, a bandwidth corresponding to the second time unit group, a transmit power corresponding to the first time unit group, a transmit power corresponding to the second time unit group, a subcarrier spacing corresponding to the first time unit group, a subcarrier spacing corresponding to the second time unit group, a frequency range corresponding to the first time unit group, or a frequency range corresponding to the second time unit group.

51. The method according to any one of claims 42 to 50, wherein time unit types respectively corresponding to the first time unit group and the second time unit group are different.

52. The method according to any one of claims 42 to 50, wherein time unit types respectively corresponding to a part of the first time unit group and another part of the first time unit group are different; and/or time unit types respectively corresponding to a part of the second time unit group and another part of the second time unit group are different.

53. The method according to claim 51 or 52, wherein the time unit types comprise a first type adopting a normal cyclic prefix (NCP) and a second type adopting an extended cyclic prefix (ECP).

54. The method according to any one of claims 42 to 50, further comprising: transmitting or receiving first configuration information, wherein the first configuration information is used to configure time unit types respectively corresponding to the first time unit group and the second time unit group.

55. The method according to any one of claims 42 to 50, wherein subcarrier spacings respectively corresponding to the first time unit group and the second time unit group are different.

56. The method according to any one of claims 42 to 50, wherein subcarrier spacings respectively corresponding to a part of the first time unit group and another part of the first time unit group are different; and/or subcarrier spacings respectively corresponding to a part of the second time unit group and another part of the second time unit group are different.

57. The method according to any one of claims 42 to 50, further comprising: transmitting or receiving second configuration information, wherein the second configuration information is used to configure subcarrier spacings respectively corresponding to the first time unit group and the second time unit group.

58. The method according to any one of claims 42 to 57, wherein each of the first time unit group and the second time unit group comprises at least one time unit, wherein the time unit comprises at least one of a frame, a subframe, a slot, a sub-slot, a symbol group, or a symbol.

59. The method according to any one of claims 42 to 57, wherein the first time interval is at least one of or a subset of at least one of a cyclic prefix, a guard interval, a flexible time, or a measurement interval.

60. The method according to any one of claims 42 to 57, wherein the first time interval is greater than or equal to a predefined interval, wherein the predefined interval is at least one of or a subset of at least one of a cyclic prefix, a guard

interval, a flexible time, or a measurement interval.

**61.** The method according to any one of claims 42 to 60, wherein the first time unit group and the second time unit group are used to carry different signals or channels.

**62.** The method according to claim 61, wherein the first time unit group and the second time unit group being used to carry different signals or channels comprises:
the first time unit group is used to carry a communication signal or a communication channel, and the second time unit group is used to carry a sensing signal or a sensing channel; or the first time unit group is used to carry the communication signal or the communication channel, and the second time unit group is not used to carry the communication signal or the communication channel; or the second time unit group is used to carry the sensing signal or the sensing channel, and the first time unit group is not used to carry the sensing signal or the sensing channel; or the first time unit group is used to carry the communication signal or the communication channel, and the second time unit group is used to carry the sensing signal or the sensing channel and/or the communication signal or the communication channel.

**63.** An apparatus for signal transmission, comprising:

a transceiver module, configured to transmit or receive a signal in a time-domain resource that conforms to a first frame structure;
wherein the first frame structure comprises at least one of: a first time unit group, a second time unit group, or a first time interval.

**64.** An apparatus for signal transmission, comprising:

a transceiver module, configured to transmit or receive a first signal and/or a second signal;
wherein a time interval between the first signal and the second signal comprises a predefined interval.

**65.** An apparatus for transmitting configuration information, comprising:

a transceiver module, configured to transmit or receive time-domain configuration information, wherein the time-domain configuration information is used to configure at least one of a first time unit group, a second time unit group, or a first time interval;
wherein the first time unit group is a time-domain resource allowed to be occupied by a first signal, and the second time unit group is a time-domain resource allowed to be occupied by a second signal.

**66.** A communication device, comprising:

a processor; a transceiver connected to the processor; and a memory configured to store one or more executable instructions of the processor;
wherein the processor is configured to load and execute the one or more executable instructions to implement the method for signal transmission according to any one of claims 1 to 21, or the method for signal transmission according to any one of claims 22 to 41, or the method for transmitting configuration information according to any one of claims 42 to 62.

**67.** A computer-readable storage medium, storing at least one program, which when loaded and executed by a processor, causes the processor to implement the method for signal transmission according to any one of claims 1 to 21, or the method for signal transmission according to any one of claims 22 to 41, or the method for transmitting configuration information according to any one of claims 42 to 62.

**68.** A computer program product, comprising one or more computer instructions stored in a computer-readable storage medium, wherein the one or more computer instructions, when read from the computer-readable storage medium and executed by a processor, cause the processor to implement the method for signal transmission according to any one of claims 1 to 21, or the method for signal transmission according to any one of claims 22 to 41, or the method for transmitting configuration information according to any one of claims 42 to 62.

Slot
0
1
2
3
......
13
Subframe
0
......
N
Frame
0
1
2
......
9

FIG. 1

Subframe (1ms)
15kHz
Slot (14 symbols)
30kHz
Slot (14 symbols)
Slot (14 symbols)
60kHz
Slot (14 symbols)
Slot (14 symbols)
Slot (14 symbols)
Slot (14 symbols)
120kHz
Slot (14 symbols)
Slot (14 symbols)
Slot (14 symbols)
Slot (14 symbols)
Slot (14 symbols)
Slot (14 symbols)
Slot (14 symbols)
Slot (14 symbols)

FIG. 2

CP
Symbol
4.7us
66.67us
NCP+Normal symbol
CP
Symbol
16.67us
66.67us
ECP+Normal symbol

FIG. 3

First symbol
Second symbol
Receiver path 1
CP
Sensing signal
CP
Communication signal
Receiver path 2
CP
Sensing signal
CP
Communication signal
First symbol
Second symbol

FIG. 4

Downlink sub-band
PDSCH
510
Uplink sub-band
PDSCH
Downlink sub-band

FIG. 5

Communication system
Network devices 120
Uplink
Downlink
Terminal devices 110

FIG. 6

Transmitting or receiving a signal in a time domain resource that conforms to a first frame structure
710

FIG. 7

First time unit group | Second time unit group | First time interval
First frame structure
(a)

Second time unit group | First time interval | First time unit group
First frame structure
(b)

First time unit group | First time interval
First frame structure
(c)

FIG. 8

(a) Bitmap

Start position
Number
(b) SLIV

FIG. 9

First sub-slot (ECP) | Second sub-slot (NCP)
CP
symbols used to carry a sensing signal or a sensing channel and/or symbols corresponding to a guard interval

FIG. 10

Transmitting or receiving a first signal and/or a second signal
1110
FIG. 11
Transmitting or receiving time domain configuration information
1210
FIG. 12
Transceiver module 1310
Processing module 1320
FIG. 13
Transceiver module 1410
Processing module 1420
FIG. 14
Transceiver module 1510
Processing module 1520
FIG. 15
Communication device 1600
Processor
1601
Transmitter
1603
1605
Bus
Receiver
1602
Memory
1604

FIG. 16

**INTERNATIONAL SEARCH REPORT**

International application No.
**PCT/CN2023/130297**

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 第一, first, 第二, second, 信号, signal, 感知, sensing, 通信, 干扰, interfere+, 间隔, interval, 时域, 时间单元, 时隙, slot, 符号, symbol

**C. DOCUMENTS CONSIDERED TO BE RELEVANT**

| Category* | Citation of document, with indication, where appropriate, of the relevant passages | Relevant to claim No. |
|---|---|---|
| X | CN 115733505 A (HUAWEI TECHNOLOGIES CO., LTD.) 03 March 2023 (2023-03-03) claims 1-33, and description, paragraphs 98 and 103-124 | 1-68 |
| X | CN 115118402 A (HUAWEI TECHNOLOGIES CO., LTD.) 27 September 2022 (2022-09-27) claims 1-25, and description, paragraphs 72-141 | 1-68 |
| A | CN 115767572 A (HUAWEI TECHNOLOGIES CO., LTD.) 07 March 2023 (2023-03-07) entire document | 1-68 |
| A | WO 2023280146 A1 (VIVO MOBILE COMMUNICATION CO., LTD.) 12 January 2023 (2023-01-12) entire document | 1-68 |
| A | ERICSSON. "Timing, Interference Management and Power Control in Enhanced IAB" *3GPP TSG-RAN WG1 Meeting #106-e, R1-2108108,* 27 August 2021 (2021-08-27), entire document | 1-68 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 June 2024** | **27 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/130297**

| Patent document cited in search report | Publication date (day/month/year) | Patent family member(s) | Publication date (day/month/year) |
|---|---|---|---|
| CN 115733505 A | 03 March 2023 | WO 2023025301 A1 | 02 March 2023 |
| CN 115118402 A | 27 September 2022 | WO 2022194263 A1 | 22 September 2022 |
| CN 115767572 A | 07 March 2023 | WO 2023030209 A1 | 09 March 2023 |
| WO 2023280146 A1 | 12 January 2023 | EP 4369820 A1 | 15 May 2024 |
| | | CN 115604843 A | 13 January 2023 |

Form PCT/ISA/210 (patent family annex) (July 2022)